# FASCICULE DE BREVET EUROPEEN

(11) **EP 0 596 760 B1**
(45) Date de publication et mention de la délivrance du brevet: **04.06.1997**
(21) Numéro de dépôt: 93402359.9
(22) Date de dépôt: 27.09.1993
(51) Int. Cl.: G07F 17/32

(54) **Dispositif électronique de jeu de hasard**
Elektrische Glücksspielvorrichtung
Electrical device applied to games of chance

(30) Priorité: 04.11.1992 FR 9213239
(43) Date de publication de la demande: 11.05.1994
(73) Titulaire: INFO TELECOM, 67550 Vendenheim (FR); LA FRANCAISE DES JEUX, F-92000 Neuilly-sur-Seine (FR)
(72) Inventeur: Reibel, Jean-Michel, F-67450 Lampertheim (FR); Simon, Pierre-Luc, F-67310 Wasselonne (FR); Bigonneau, Eric, F-75020 Paris (FR); Bouedec, Jean-Etienne, F-94220 Charenton (FR)
(74) Mandataire: Casalonga, Axel

(56) Documents cités:
- EP-A- 0 450 520
- WO-A-89/02139
- WO-A-91/06931

## Description

L'invention concerne un dispositif électronique de jeu de hasard.

On connaît actuellement différents jeux de hasard permettant à un joueur de gagner des sommes d'argent moyennant le paiement d'une mise de départ. Ainsi, par exemple dans le jeu appelé "loto" (marque déposée) le joueur coche une série de chiffres sur un ticket qu'il fait valider auprès d'un organisme spécialisé en en acquittant un prix correspondant à la mise de départ. Un tirage au sort ultérieur est effectué sous contrôle dans un endroit choisi et, les joueurs en possession d'un ticket gagnant peuvent retirer leur gain auprès d'un organisme payeur.

Par rapport à ces jeux classiques nécessitant un support papier, EP-A-0 450 520 décrit un terminal électronique portable de lotterie comportant une interface avec le joueur et une mémoire permettant au joueur d'enregistrer dans le terminal des numéros choisis par lui, et de les transmettre, accompagnés d'informations relatives au paiement (numéro de carte bancaire), à un centre de contrôle via une liaison téléphonique. Lorsque les numéros gagnants seront ultérieurement radiodiffusés ou publiés, le joueur introduira les numéros gagnants dans le terminal et des moyens de traitement de ce dernier compareront ces numéros gagnants avec ceux choisis par le joueur pour déterminer si le joueur a éventuellement gagné.

Par rapport à ces jeux de l'art antérieur, nécessitant des tirages au sort à des dates prédéterminées et valables pour tous les joueurs, l'invention propose un concept radicalement différent de dispositif de jeu de hasard.

Un but de l'invention est de proposer un boîtier autonome et portable destiné à permettre à un joueur d'effectuer une ou plusieurs épreuves de jeu de hasard, la réussite ou l'échec auxdites épreuves conditionnant un score ou un niveau de gain suivant des règles de jeu prédéterminées. Ce boîtier constitue alors également l'élément de transaction pour le paiement du gain et comporte tous les éléments nécessaires à la vérification de ce gain. Outre ce boîtier portable et autonome, il est prévu un système de contrôle, externe au boîtier, permettant à l'organisme payeur d'effectuer les vérifications nécessaires avant le paiement du gain.

L'invention a encore pour but de permettre d'effectuer au sein même du boîtier électronique, le tirage au sort des données de référence par rapport auxquelles seront comparées les données de jeu choisies par le joueur, L'invention vise également à permettre la simulation d'un ou de plusieurs lancés de dés, en effectuant au sein du boîtier même, un tirage au sort des données de jeu qui seront comparées à des données de référence prédéterminées.

Un problème très important, inhérent à un tel dispositif de jeu, consiste à lutter contre la fraude. L'invention a à cet effet également pour but, de prévoir plusieurs niveaux de sécurité et de vérification ayant trait aussi bien à l'origine du boîtier portable qu'au contenu de ses informations relatives d'une part à l'état "perdu" ou "gagné" du jeu, et d'autre part à la valeur proprement dite du gain accumulé par le joueur, valeur qui peut être très importante.

L'invention propose donc un dispositif électronique de jeu de hasard, comprenant
a) un boîtier portable comprenant
   - une interface-boîtier d'entrée/sortie apte à recevoir une information prédéterminée d'autorisation de jeu sans laquelle le boîtier est inapte au jeu,
   - une interface de communication avec le joueur,
   - des moyens de mémoire aptes à stocker au moins une donnée de référence,
   - des moyens de traitement-boîtier, comportant
      . des moyens de comparaison aptes à comparer ladite donnée de référence avec une donnée de jeu introduite par le joueur par l'interface de communication, l'une de ces deux données étant une valeur générée de façon aléatoire,
         . des moyens aptes à établir une information de gain dépendant au moins du résultat de ladite comparaison, et à stocker cette information de gain dans les moyens de mémoire, et
         . des moyens de cryptage-boîtier, aptes en réponse à une information prédéterminée de demande de paiement reçue par l'interface-boîtier d'entrée/sortie, à établir une première valeur de gain cryptée à partir de ladite information de gain et à délivrer cette première valeur cryptée à l'interface-boîtier, et
b) un système de contrôle, externe au boîtier, comprenant
   - une interface-système d'entrée/sortie apte à coopérer avec l'interface boîtier d'entrée/sortie, et
   - des moyens de traitement-système, aptes,
      . en présence d'une demande de paiement émanant du joueur, à lire ladite information de gain contenue dans les moyens de mémoire du boîtier et à délivrer ladite information de demande de paiement à l'interface-système d'entrée/sortie, et comportant
      . des moyens de cryptage-système, homologues des moyens de cryptage-boîtier, aptes à établir une deuxième valeur de gain cryptée à partir de ladite information de gain lue, ainsi que des moyens de comparaison aptes à comparer les deux valeurs de gain cryptées; le paiement effectif du gain au joueur est alors conditionné au moins par la concordance des deux valeurs de gain cryptées.

L'homme du métier sait que le terme "aléatoire" associé ici à la génération d'une donnée de référence ou d'une donnée de jeu, est d'une façon générale un concept mathématique, et que la réalisation matérielle de moyens de génération "aléatoire" rendent cette génération pseudo ou quasi aléatoire, même si pratiquement il est impossible de prévoir à l'avance la donnée ayant été générée. Le terme "aléatoire" est néanmoins utilisé ici pour traduire l'impossibilité pratique, pour un tiers de prévoir à l'avance la donnée de jeu ou la donnée de référence.

Selon un mode de réalisation les moyens de traitement-système sont aptes à transmettre ladite information prédéterminée d'autorisation de jeu. Par ailleurs, afin de lire l'information de gain, les moyens de traitement-système sont aptes, en présence d'une demande de paiement émanant du joueur, à transmettre à l'interface - système d'entrée/sortie une demande de statut en réponse à laquelle les moyens de traitement-boîtier délivrent ladite information de gain à l'interface-boîtier d'entrée/sortie.

Selon un mode de réalisation les moyens de traitement-boîtier comportent des premiers moyens de génération aléatoire aptes à générer aléatoirement ladite donnée de référence parmi un ensemble prédéterminé de valeurs, tandis que l'interface de communication comporte des moyens d'introduction de données permettant au joueur de choisir sa donnée de jeu parmi le même ensemble prédéterminé de valeurs.

Afin d'assurer le caractère aléatoire du tirage au sort des données de référence, les premiers moyens de génération aléatoire comportent avantageusement au moins un compteur de jeu fonctionnant depuis un instant initial précédant la réception de ladite information prédéterminée d'autorisation de jeu, ce compteur étant susceptible d'être stoppé à la réception d'une information d'arrêt choisie et de mémoriser la valeur qu'il présente lors de son arrêt de fonctionnement, cette valeur d'arrêt définissant, ladite donnée de référence.

L'information d'arrêt est de préférence ladite information d'autorisation de jeu.

En variante, il est possible de concevoir un jeu dans lequel les données de référence sont par exemple des constantes fixées par les règles du jeu, les données de jeu devant être choisies aléatoirement par le joueur d'une façon analogue à un lancé de dés. Dans une telle variante les moyens de traitement-boîtier peuvent comporter des deuxièmes moyens de génération aléatoire, commandés par l'action du joueur et aptes à délivrer aléatoirement ladite donnée de jeu, la donnée de référence étant une donnée prédéterminée stockée dans les moyens de mémoire.

Afin d'assurer une meilleure sécurité dans la vérification de l'information de gain, les moyens de mémoire sont aptes à stocker une première donnée auxiliaire prédéterminée, et les moyens de cryptage-boîtier sont aptes à générer la première valeur de gain cryptée à partir de ladite information de gain et de ladite première donnée auxiliaire.

La première donnée auxiliaire est avantageusement obtenue à partir d'un premier cryptage auxiliaire d'au moins une première information spécifique au boîtier telle que son numéro de série, et est présente dans les moyens de mémoire avant la réception de l'information d'autorisation de jeu.

Selon un mode de réalisation les moyens de cryptage-boîtier comportent:
- un générateur pseudo-aléatoire de cryptage de gain apte à être initialisé par une valeur initiale et à fonctionner jusqu'à la réception d'une indication d'arrêt, la première valeur de gain cryptée étant alors la valeur délivrée par le générateur pseudo-aléatoire de cryptage de gain à la réception de ladite indication d'arrêt,
- un premier circuit logique apte à recevoir comme variables d'entrée ladite information de gain et une partie au moins de la première donnée auxiliaire stockée, à appliquer une première fonction logique prédéterminée à ces deux variables d'entrée et à délivrer une première valeur de sortie correspondante, définissant ladite valeur initiale du générateur pseudo-aléatoire de cryptage de gain, et
- un compteur auxiliaire apte à compter ou décompter depuis une valeur initiale-compteur jusqu'à une valeur finale-compteur, ladite indication d'arrêt du fonctionnement du générateur pseudo-aléatoire de cryptage de gain étant délivrée par le compteur auxiliaire lorsque ladite valeur finale-compteur est atteinte.

Les moyens de cryptage-boîtier comprennent également de préférence un second circuit logique apte à recevoir comme variables d'entrée un mot binaire pseudo-aléatoire et une deuxième partie au moins de la première donnée auxiliaire stockée, à appliquer une deuxième fonction logique prédéterminée à ces deux variables d'entrée et à délivrer une deuxième valeur de sortie correspondante, définissant ladite valeur initiale compteur ou ladite valeur finale compteur.

Les moyens de traitement-système comportent avantageusement des moyens de génération pseudo-aléatoire-système aptes à générer ledit mot binaire pseudo-aléatoire, ce mot binaire pseudo-aléatoire accompagnant ladite information de demande de paiement.

Afin d'effectuer la vérification de la première valeur de gain cryptée, les moyens de traitement-système comportent des premiers moyens de cryptage auxiliaires aptes à effectuer ledit premier cryptage auxiliaire de ladite première information spécifique pour recalculer la valeur de la première donnée auxiliaire; par ailleurs, les moyens de cryptage-système comportent des moyens analogues à ceux des moyens de cryptage-boîtier, et sont aptes à déterminer la deuxième valeur de gain cryptée à partir de la valeur de la première donnée auxiliaire recalculée et du mot binaire pseudo-aléatoire. Cette deuxième valeur de gain cryptée sera alors comparée avec la première.

Afin d'effectuer une autre vérification avant paiement, les moyens de mémoire sont avantageusement aptes à stocker une deuxième donnée auxiliaire prédéterminée, et les moyens de traitement-système sont aptes, en présence de la demande de paiement émanant du joueur, à effectuer un traitement de vérification de la valeur de cette deuxième donnée auxiliaire, avant de délivrer ladite information de demande de paiement au boîtier. Cette deuxième donnée auxiliaire peut être un certificat par un algorithme de codage à clé secrète ou publique d'un authentifiant spécifique au système de contrôle tel que le numéro de série d'un terminal de vente.

Afin de vérifier l'origine du boîtier il est avantageusement prévu que les moyens de mémoire soient aptes à stocker, avant la réception de ladite information d'autorisation de jeu, une donnée d'authentification du boîtier; la réception de ladite information d'autorisation de jeu est alors conditionnée à la vérification de cette donnée d'authentification.

Cette donnée d'authentification peut résulter d'un cryptage d'authentification d'une troisième information spécifique au boîtier; il peut s'agir d'un certificat du numéro de série du boîtier obtenu à partir d'un algorithme de cryptage à clé secrète ou publique utilisant une autre clé que celle prévue pour la deuxième donnée auxiliaire.

Les moyens de traitement-système comportent alors de préférence des moyens de cryptage d'authentification aptes à recalculer la donnée d'authentification à partir de la troisième information spécifique pour vérifier la valeur de cette troisième information spécifique lue dans les moyens de mémoire.

Le numéro de série du boîtier peut être présent dans les moyens de mémoire du boîtier. Il peut également être lu par un moyen de lecture approprié, par exemple par un lecteur optique si le numéro de série figure sous forme de code-barres sur une étiquette fixée sur le boîtier.

Selon un mode de réalisation les moyens de mémoire comportent deux mémoires, l'une d'entre elles contenant la première donnée auxiliaire, l'autre contenant d'abord la donnée d'authentification puis, après vérification de cette dernière, la deuxième donnée auxiliaire.

Par ailleurs les moyens de mémoire peuvent comporter un compteur d'état apte à contenir une information d'état représentative du résultat du jeu, ainsi qu'un compteur de paiement apte à contenir une information de paiement représentative d'un paiement déjà effectué ou non encore effectué au joueur.

En présence de la demande de paiement émanant du joueur, les moyens de traitement-système sont alors aptes à lire en outre les contenus des compteurs d'état et de paiement avant de délivrer ladite information de demande de paiement au boîtier.

Le boîtier comporte avantageusement des moyens d'alimentation autorisant le fonctionnement de certains au moins de ces moyens, tels que les compteurs de jeu et les mémoires, avant la réception de l'information d'autorisation de jeu.

Le boîtier est avantageusement inapte au jeu à la suite d'une comparaison entre une donnée de référence et une donnée de jeu représentative d'un jeu perdant et/ou après un paiement effectif au joueur.

L'interface de communication comporte de préférence des moyens de restitution au joueur d'une information de résultat représentative du résultat de la comparaison entre les données de jeu et de référence, lui indiquant s'il a perdu ou gagné.

Selon un mode de réalisation de l'invention les moyens de mémoire sont aptes à stocker une pluralité de données de référence, et une pluralité de données de jeu sont susceptibles d'être introduites par le joueur.

Ces données de jeu peuvent être introduites successivement, chaque donnée de jeu introduite étant comparée à une donnée de référence prédéterminée; une donnée de jeu ne peut être introduite par l'interface de communication qu'en cas d'une concordance entre la donnée de jeu précédemment introduite et la donnée de référence correspondante, et à chaque concordance correspond une information de gain différente.

L'information de résultat comporte alors avantageusement l'affichage d'une information de niveau de gain correspondant à l'information de gain contenue dans les moyens de mémoire.

Les moyens de mémoire comportent de préférence un compteur de gain apte à contenir successivement des mots binaires de gain prédéterminés représentatifs des informations de gain successives, chaque mot binaire différant du mot suivant et du mot précédent par au moins deux bits. Ceci permet d'avoir des mots binaires suffisamment différents les uns des autres, afin de bien différencier les informations de gain correspondantes et d'éviter notamment des erreurs occasionnées par exemple par une mauvaise lecture ou écriture d'un seul bit. De même le compteur d'état est avantageusement apte à contenir successivement des mots binaires d'état prédéterminés représentatifs des informations d'état successives, chaque mot binaire d'état différant du mot suivant et du mot précédent par au moins deux bits.

Lorsque plusieurs données de jeu doivent être introduites par le joueur, notamment successivement, les premiers moyens de génération aléatoire comportent de préférence une pluralité de compteurs de jeu, chaque compteur étant susceptible de contenir une donnée de référence et est associé à une introduction de donnée de jeu par le joueur. On peut alors prévoir que la réception de ladite information d'autorisation de jeu stoppe le fonctionnement de tous les compteurs, la pluralité de données de référence étant alors la pluralité de valeurs qu'avaient les compteurs à la réception de cette information d'autorisation de jeu. En d'autres termes, le tirage au sort des données de référence est effectué une fois pour toutes avant l'introduction des données de jeu par le joueur. On peut cependant prévoir qu'un tirage au sort s'effectue pour chaque donnée de jeu introduite. Dans ce cas un seul compteur peut être associé à toutes les introductions successives des données de jeu par le joueur; l'introduction d'une donnée de jeu par le joueur fige alors le compteur correspondant à une valeur définissant la valeur de référence associée à cette donnée de jeu.

Le système de contrôle comporte avantageusement une interface de dialogue avec le joueur apte à recevoir ladite demande de paiement. Cette interface de dialogue peut être utilisée à d'autres fins. Ainsi, en présence d'une demande de vérification d'information de gain émanant du joueur, les moyens de traitement-système peuvent lire les contenus des compteurs de gain, d'état, et de paiement et communiquer les résultats de cette lecture sur l'interface de dialogue.

Le système de contrôle peut comporter au moins une station, telle qu'un terminal, et de préférence une pluralité de stations de structure analogue, les informations d'autorisation de jeu et de demande de paiement pouvant être délivrées par la même station ou par deux stations différentes.

Afin d'effectuer une autre vérification, notamment lorsque le gain est important, le système de contrôle comporte avantageusement des moyens de stockage d'une liste d'authentifiants des boîtiers gagnants et payés, et en présence d'une demande de paiement émanant du joueur et correspondant à un gain supérieur à une valeur de gain prédéterminée, les moyens de traitement-système sont aptes à vérifier si l'authentifiant du boîtier concerné se situe déjà dans ladite liste.

D'autres avantages et caractéristiques de l'invention apparaîtront à l'examen de la description détaillé d'un mode de réalisation nullement limitatif et illustré sur les dessins sur lesquels :
- la figure 1 représente schématiquement une station et un boîtier selon l'invention,
- la figure 2 illustre un réseau de stations,
- les figures 3a, 3b, 3c représentent plus en détail le boîtier de la figure 1,
- la figure 4 représente un écran d'affichage du boîtier,
- les figures 5, 6 et 7 représentent des synoptiques schématiques de l'architecture câblée d'un composant ASIC incorporé au boîtier, et
- les figures 8, 9, 10a, 10b, 10c représentent des organigrammes de fonctionnement du dispositif et de mise en oeuvre du jeu.

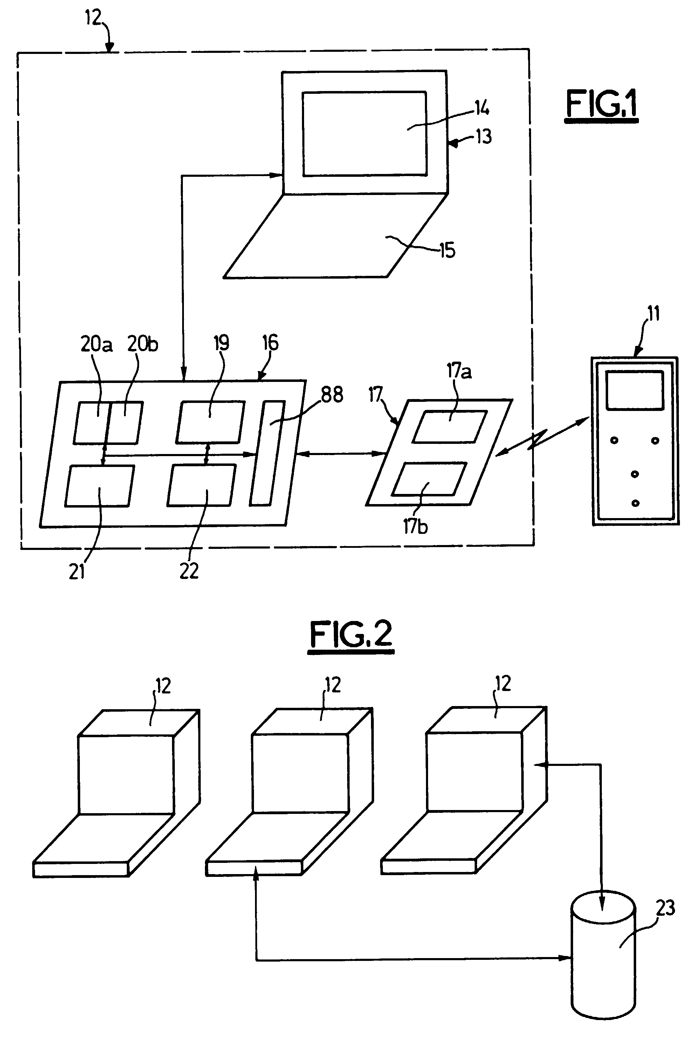

Tel qu'illustré sur la figure 1, le dispositif électronique de jeu comporte un boîtier portable 11 et un système de contrôle 12, externe au boîtier 11, et comprenant une interface-système d'entrée/sortie 17, comportant ici deux plages de cuivre 17a et 17b aptes à coopérer avec des plages cuivre homologues d'une interface-boîtier d'entrée/sortie du boîtier 11 afin de réaliser un échange de données par un couplage capacitif.

Outre cette inferface d'entrée/sortie 17, le système de contrôle 12 comporte des moyens de traitement-système 16 connectés à cette inferface 17 ainsi qu'à une interface de dialogue 13 avec un utilisateur tel que le vendeur ou l'agent payeur. Cette inferface de dialogue comporte un écran d'affichage 14 ainsi qu'un clavier 15 pour l'introduction d'informations de commande par exemple.

Les moyens de traitement-système 16 sont incorporés au sein d'une carte électronique architecturée autour d'un micro-contrôleur dialoguant avec l'interface 17 par l'intermédiaire d'un registre d'entrée/sortie 88. Comme on le verra plus en détails ci-après lors du fonctionnement du dispositif, les moyens de traitement-système 16 comportent des moyens de cryptage-système 19, des premier et deuxième moyens de cryptage auxiliaires 20a et 20b, des moyens de cryptage d'authentification 21 ainsi que des moyens de génération pseudo-aléatoire système 22 aptent à générer un mot binaire pseudo-aléatoire dont la signification sera expliquée ci-après. Matériellement, ces différents moyens sont réalisés de façon logicielle au sein du micro-contrôleur des moyens de traitement-système.

Sur la figure 1, les moyens de traitement-système 16, l'interface-système d'entrée/sortie 17 et l'interface de dialogue 13 sont matériellement regroupés au sein d'une station telle qu'un terminal. On peut à cet effet prévoir d'utiliser un micro-ordinateur classique, tel que par exemple celui connu sous la marque PC de la société IBM. Dans ce cas, l'interface de dialogue 13 comportera l'écran et le clavier du micro-ordinateur. On peut alors prévoir une carte électronique supplémentaire enfichable dans le micro-ordinateur et incorporant les moyens de traitement-système, ainsi qu'une extension réalisant l'interface 17.

Bien que d'une façon générale, le système de contrôle puisse être incorporé au sein d'une seule station, il est prévu d'utiliser un réseau de stations 12 (figure 2) ayant toutes une structure analogue. Certaines au moins de ces stations peuvent être reliées à des moyens de stockage 23 aptent à stocker, comme on le verra plus en détails ci-après, une liste d'authentifiants de boîtiers ayant abouti à un jeu gagnant et ayant donné lieu à un paiement effectif au joueur.

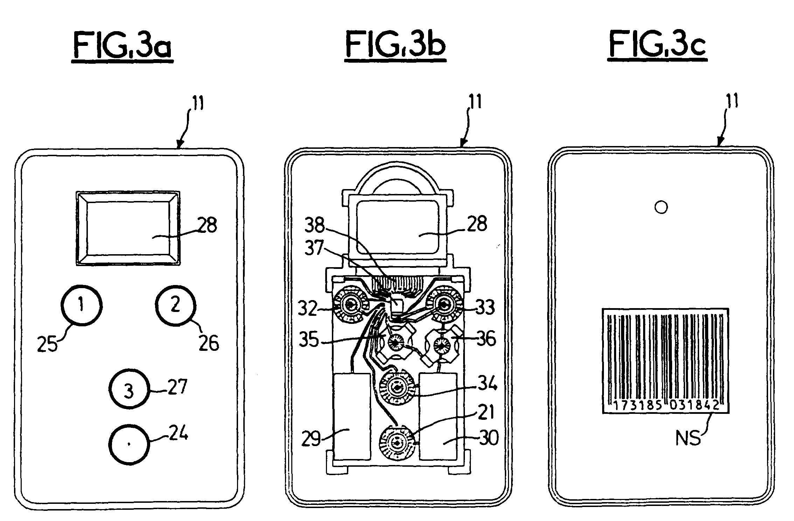

Le boîtier 11 a des dimensions hors tout lui permettant de tenir aisément dans une main. Il comporte sur sa face avant (figure 3a) une touche 24 permettant de le mettre sous tension pour activer certains au moins des moyens le constituant, comme par exemple l'écran d'affichage 28. Par ailleurs, il est prévu, dans cet exemple de réalisation trois touches de jeu 25, 26 et 27, sur lesquelles sont respectivement inscrits trois chiffres (1, 2 et 3) représentant trois données de jeu parmi lesquelles le joueur pourra faire son choix.

Sur sa face arrière (figure 3c) se trouve une étiquette sur laquelle figure par exemple en code barre, le numéro de série NS du boîtier. Ce numéro de série constitue ici un authentifiant unique et spécifique au boîtier.

La figure 3b illustre schématiquement une vue interne du boîtier 11. On y trouve les empreintes électroniques 21, 32, 33 et 34 des touches 24, 25, 26 et 27. Deux plages de cuivre 29 et 30, faisant partie d'une interface-boîtier d'entrée/sortie, sont aptes à coopérer avec les deux plages de cuivre homologues 17a et 17b d'une station 12. Des moyens d'alimentation autonomes 35 et 36, tels que les piles, permettent d'assurer le caractère autonome du boîtier portable et servent, comme on le verra ci-après, à alimenter de façon permanente certains des composants du boîtier.

Alors que les trois touches de jeu 25, 26, 27 et l'écran d'affichage 28 forment une interface de communication avec le joueur, un élément essentiel de l'invention consiste ici en un circuit intégré câblé spécifique (ASIC: Application Specific Integrated Circuit) portant la référence 37 et incorporant comme on le verra plus en détails ci-après, des moyens de traitement-boîtier ainsi que des moyens de mémoire. Cet ASIC est relié par un réseau de connexion 38 aux touches de jeu, aux moyens d'alimentation, ainsi qu'à l'écran d'affichage 28. Bien entendu, on aurait pu utiliser, à la place d'un composant ASIC, un micro-contrôleur incorporant de façon logicielle certaines au moins des fonctions du boîtier qui seront décrites ci-après. Néanmoins, l'utilisation d'un composant ASIC permet de réduire les coûts de fabrication et augmente la sécurité du dispositif selon l'invention, contre la fraude. Il est en effet plus difficile, pour un fraudeur, d'accéder et de comprendre l'architecture d'un schéma de câblage spécifiquement réalisé pour une application et incorporé au sein d'un ASIC, que d'accéder aux instructions d'un programme incorporé au sein d'une mémoire de programme d'un micro-contrôleur.

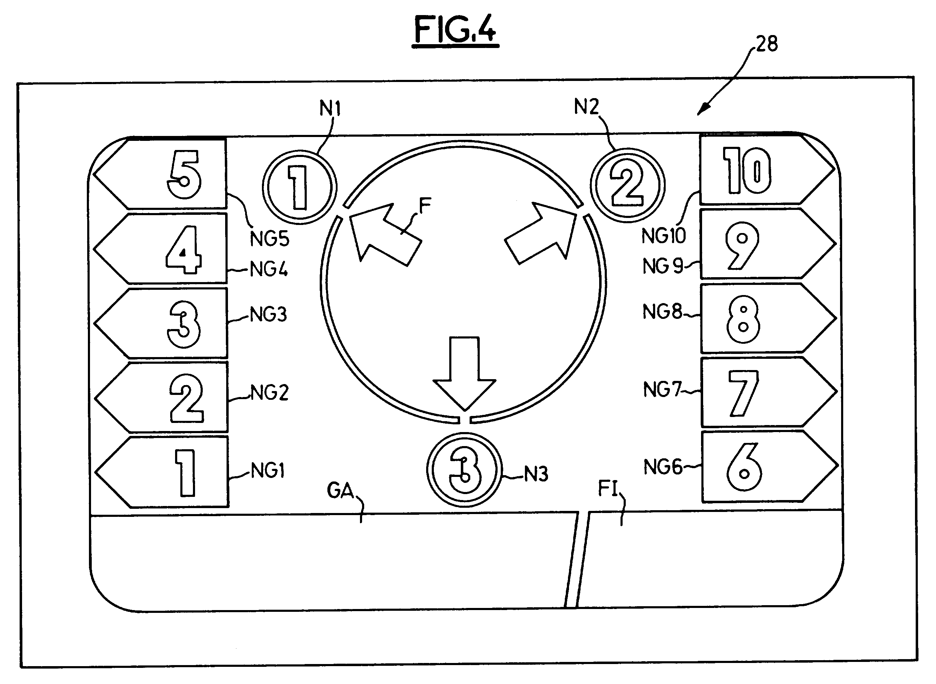

Sur la figure 4, est représenté un écran d'affichage 28 tel qu'il est susceptible d'apparaître au joueur dans l'application spécifique de jeu qui est décrite dans cet exemple. En bas de l'écran d'affichage sont prévus deux espaces GA et FI dans lesquels sont susceptibles d'être affichés les expressions "GAGNE" et "FIN" selon que le joueur a gagné ou perdu dans son jeu de hasard. Sur les deux bords latéraux de l'écran d'affichage sont disposés respectivement deux colonnes d'emplacements numérotés 1, 2, 3, 4, 5 et 6, 7, 8, 9, 10. Ces emplacements portent les références NG1-NG10 et correspondent à des affichages de niveaux de gains successifs atteints par le joueur lors de son jeu. Au centre de l'écran d'affichage, figurent des emplacements pour trois flèches F respectivement positionnées en regard d'emplacements circulaires N1, N2 et N3 à l'intérieur desquels sont matérialisés les trois chiffres 1, 2 et 3. Comme on le verra ci-après, l'une de ces flèches F va matérialiser le choix du joueur après que celui-ci ait appuyé sur l'une des touches de jeu 25 à 27, tandis que l'un des emplacements N1, N2 ou N3 matérialisera la donnée de référence tirée au hasard par le boîtier lui-même.

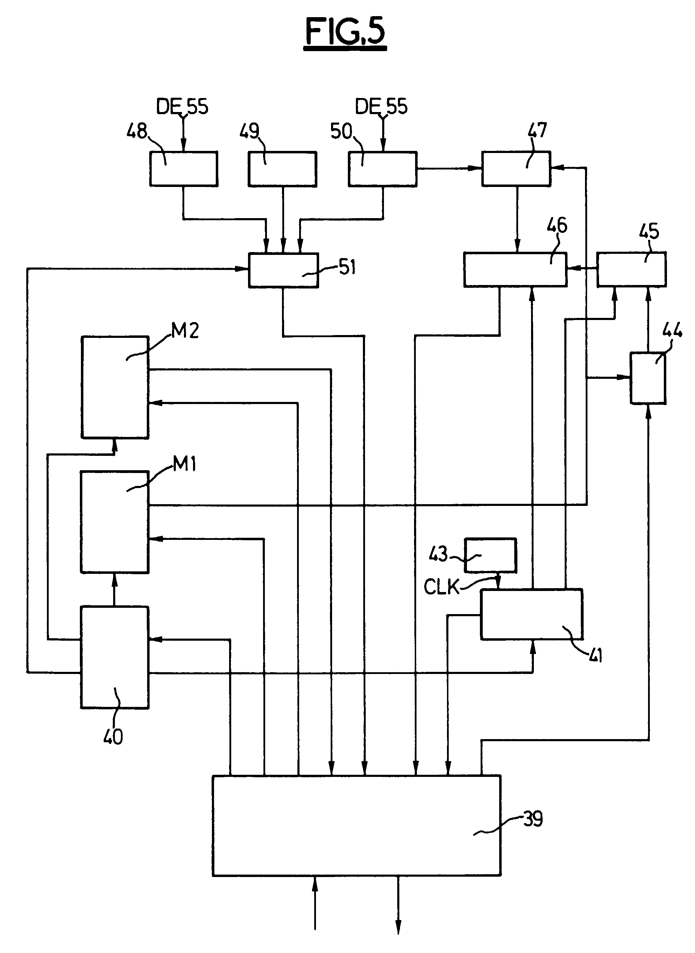

La figure 5 représente schématiquement une partie des moyens incorporés au sein du composant 37. On trouve tout d'abord un registre d'entrée-sortie série/parallèle 39, faisant partie de l'interface-boîtier d'entrée/sortie, et relié aux deux plages de cuivre 29 et 30. A ce registre 39 est relié un circuit décodeur 40 apte à décoder les diverses informations reçues par le registre 39 (entrée/sortie, écriture, lecture). Ce circuit décodeur 40 est relié à un circuit de mise en forme 51, connecté en premier lieu à un compteur d'état 48, tel qu'un compteur non linéaire, susceptible de contenir une information d'état représentative du résultat "perdu" ou "gagné" du jeu, en deuxième lieu à un compteur 49 susceptible de contenir une information représentative d'un paiement ayant été réellement effectué au joueur, et en troisième lieu à un compteur dit de gain 50, tel qu'un compteur non linéaire, apte à contenir une information de gain dépendant du résultat du jeu. En réponse à une demande de statut, le circuit de mise en forme est apte à délivrer au registre d'entrée/sortie 39 les contenus C1, C2, C3 des trois compteurs précités 48, 49 et 50.

La sortie du compteur de gain 50 est également reliée à l'entrée d'un premier circuit logique 47 dont l'autre entrée est reliée à une première mémoire vive M1. La sortie du premier circuit logique est reliée à un générateur pseudo-aléatoire dit de cryptage de gain 46, tel qu'un compteur polynomial ou un générateur cyclique, commandé également par un compteur auxiliaire 45 recevant en entrée la sortie d'un deuxième circuit logique 44 dont les deux entrées sont respectivement reliées à la mémoire M1 et au registre d'entrée sortie 39. La sortie du générateur pseudo-aléatoire de cryptage de gain 46 est reliée au registre 39.

Il est également prévu des moyens de contrôle logiques 41 de l'ensemble de ces moyens, cadencés par un signal d'horloge CLK d'une fréquence par exemple de 500 kHz, délivré par un oscillateur 43.

Une autre mémoire vive M2, reliée au registre d'entrée-sortie 39 fait partie, avec la mémoire M1, des moyens de mémoire du boîtier.

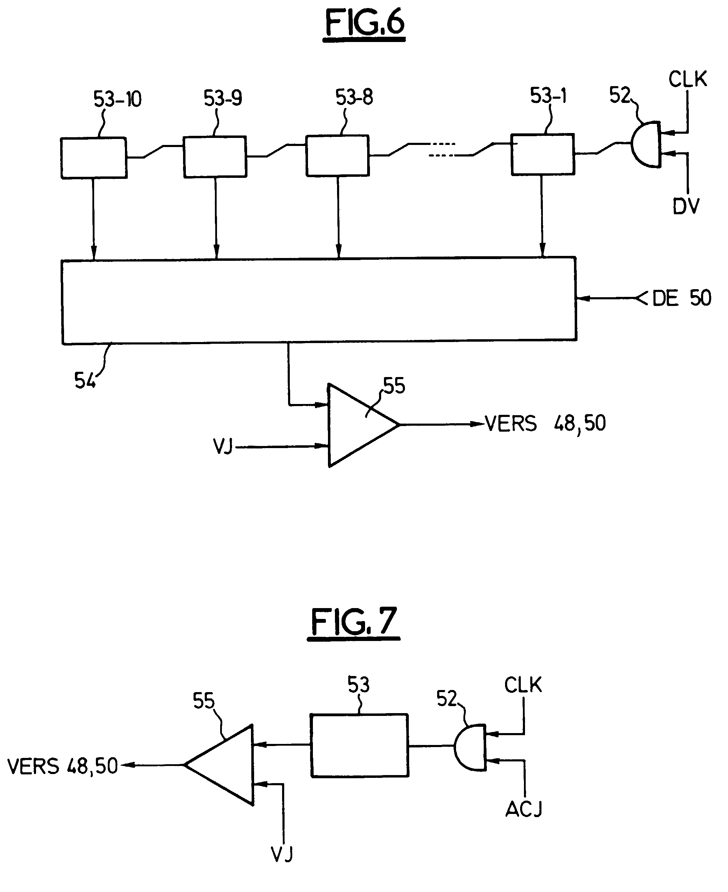

Les figures 6 et 7 illustrent plus en détail des premiers moyens de génération aléatoire aptes à générer les données de référence qui seront comparées avec les données introduites par le joueur.

La figure 6 est représentative d'un mode de réalisation applicable à un tirage au sort, effectué une seule fois pour une pluralité de données de référence successives (dix par exemple) correspondant respectivement à des introductions potentielles successives de données de jeu par le joueur.

Une porte logique ET 52 reçoit en entrée le signal d'horloge CLK ainsi qu'une information d'autorisation de jeu DV dont on reviendra ultérieurement plus en détail sur la signification. La sortie de cette porte logique 52 est relié au premier compteur modulo 2 (53-1) d'une rangée de dix compteurs 53-1 à 53-10 reliés en cascade les uns aux autres et dont les sorties sont respectivement reliées aux dix entrées d'un multiplexeur 54 dont la sortie est reliée à la première entrée d'un comparateur 55. Chaque compteur est donc susceptible d'afficher un contenu correspondant à l'un des trois chiffres 1, 2 et 3. Ce multiplexeur 54 est commandé en ce qui concerne le choix de sa voie d'entrée par la sortie du compteur de gain 50. L'autre entrée du comparateur 55 reçoit la valeur VJ de la donnée de jeu introduite par le joueur. La sortie de ce comparateur est reliée au compteur d'état 58 et au compteur de gain 50.

Comme on le verra ci-après, la figure 7 illustre un mode de réalisation plus particulièrement adapté, soit à des tirages au sort successifs associés respectivement aux introductions successives des données de jeu par le joueur, soit à une génération aléatoire d'une donnée de jeu qui serait analogue par exemple à un lancé de dé de la part du joueur. Dans ce dernier cas, la donnée de référence qui sera comparée avec la donnée de jeu générée aléatoirement, pourra être une constante mémorisée dans les moyens de mémoire du boîtier. Sur ce mode de réalisation, la porte logique 52 reçoit à la place de l'information d'autorisation de jeu DV le signal d'introduction ACJ d'une donnée de jeu par le joueur sur l'interface de communication. Il n'est alors prévu qu'un seul compteur 53 relié à cette porte logique 52 et dont la sortie est reliée à la première entrée du comparateur 55.

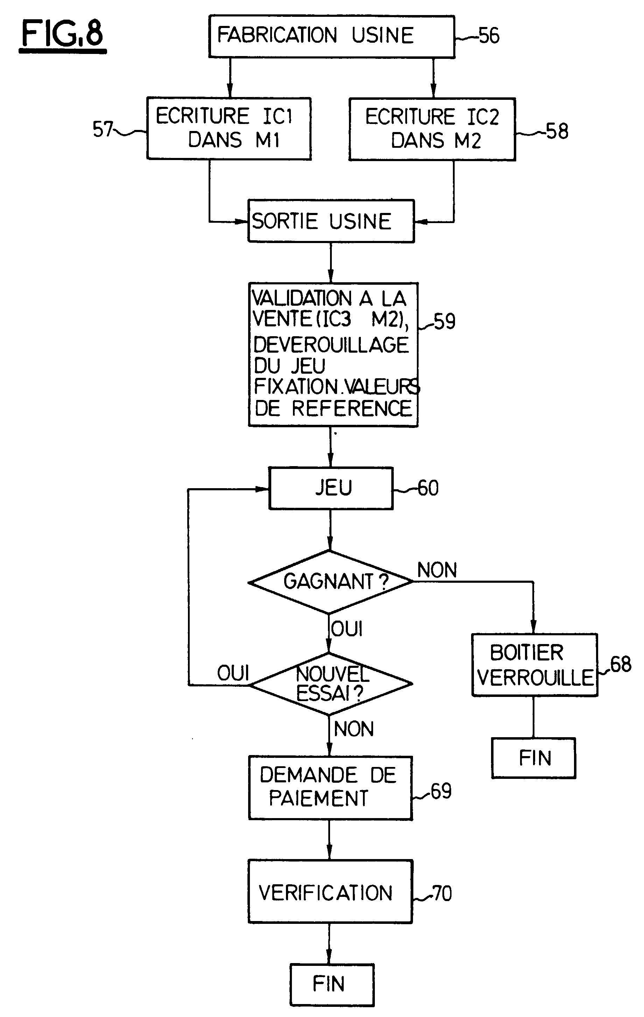

On va maintenant décrire plus en détails, en se référant plus particulièrement aux figures 8 à 10c le fonctionnement du dispositif selon l'invention.

Lors de la fabrication en usine (étape 56) une première donnée auxiliaire IC1 est inscrite dans la mémoire M1 tandis qu'une donnée d'authentification IC2 est inscrite dans la mémoire M2 (étape 57 et étape 58). La première donnée auxiliaire IC1 constitue une première sécurité qui sera utilisée lors du paiement effectif du gain au joueur. Elle résulte d'une façon générale d'un premier cryptage auxiliaire d'une information spécifique au boîtier. Plus précisément, il s'agit par exemple d'une information cryptée obtenue à partie du numéro de série NS du boîtier par un algorithme de cryptage du type à clef secrète, tel que celui connu sous le sigle DES (Data Encryption Standard) et utilisant à cet effet une première clef secrète. n serait également possible d'utiliser un algorithme de cryptage à clé publique tel que celui connu sous le sigle RSA (Rivest Shamir Adelman).

La donnée d'authentification IC2 consiste également en un cryptage d'authentification d'une information spécifique du boîtier. Concrètement, il s'agit d'un cryptage du numéro de série du boîtier à partir d'un algorithme à clef secrète (ou éventuellement publique), avec une clef différente de celle utilisée pour l'information IC1. Cette donnée IC2 est en fait un certificat du numéro de série NS.

Afin de préserver les contenus des mémoires vives M1 et M2, le boîtier sera alimenté par ses moyens d'alimentation en permanence depuis sa fabrication en usine. De ce fait, lesdits compteurs 53-1 à 53-10 fonctionnent depuis le stade de fabrication du boîtier en usine.

Néanmoins, à ce stade, le boîtier est inapte au jeu ou verrouillé. En d'autres termes, les moyens de traitement-boîtier sont inactifs et un joueur, qui viendrait à être en possession d'un tel boîtier, ne pourrait pas introduire de données de jeu à l'aide des touches 25-27.

A sa sortie d'usine, le boîtier est stocké dans un local de vente équipé d'une station de contrôle 12. Lors de la vente d'un tel boîtier à un joueur, il est tout d'abord procédé à une validation de celui-ci (étape 59). Le boîtier étant disposé sur l'interface-système 17, les moyens de traitement-système 16 procèdent à une lecture du contenu de la mémoire M2, et les moyens de cryptage d'authentification 21 recalculent, à partir du numéro de série NS et de la valeur de la clef secrète utilisée (présente également dans des moyens de mémoire de la station), la donnée d'authentification IC2. A cet effet, les moyens de traitement-système peuvent avoir connaissance du numéro de série NS du boîtier soit en raison de son stockage directement dans la mémoire M2 du boîtier, soit par une lecture optique à l'aide d'un lecteur approprié, du code barre situé sur la face arrière du boîtier. La concordance de la donnée de d'authenfication recalculée avec celle qui était présente dans la mémoire M2 avant cette étape de validation 59, permet d'effectuer une première vérification sur l'origine du boîtier et de s'assurer ainsi qu'il s'agit à priori d'un boîtier authentique.

Une fois cette vérification sur l'origine effectuée,les deuxièmes moyens de cryptage auxiliaire 20b des moyens de traitement-système déterminent une deuxième donnée auxiliaire cryptée IC3 à partir également d'une information spécifique à la station effectuant la vente et d'un algorithme de cryptage à clef secrète (ou éventuellement publique) utilisant une troisième clef différente des deux premières. Pratiquement, les deuxièmes moyens de cryptage auxiliaires utilisent comme information spécifique-station, son numéro de série, la date de la vente ainsi que le numéro d'ordre de cette vente à cette date, et déterminent le certificat crypté de cette information spécifique-station. Les moyens de traitement-système stockent alors dans la mémoire M2, cette information spécifique-station ainsi que le certificat IC3.

La concordance de la donnée d'authentification IC2 stockée dans la mémoire M2, avec celle recalculée, a également pour conséquence l'émission par les moyens de traitement-système de la station, de l'information d'autorisation de jeu DV qui a pour effet d'une part d'activer les moyens de traitement-boîtier pour rendre le boîtier apte au jeu, et, d'autre part, de stopper le fonctionnement des compteurs de jeu 53-1 à 53-10. Cette information d'autorisation de jeu ainsi que la demande de statut sont en fait des commandes particulières émises par la station, et à la réception desquelles les moyens de traitement-boîtier effectuent des opérations prédéterminées. Il convient de remarquer que, dans ce mode de réalisation, la pluralité de données de référence est alors la pluralité de valeurs qu'avaient les compteurs 53-1 à 53-10 à la réception de l'information de d'autorisation de jeu. Ces données de référence seront mémorisées dans les compteurs 53-1 à 53-10 en vue de leur comparaison avec les données de jeu. Le tirage au sort de toutes les données de référence a donc été effectué une seule fois. Par ailleurs, la cadence rapide de fonctionnement des compteurs ainsi que le caractère aléatoire de l'instant de mise en marche des compteurs à l'usine de fabrication et de l'instant de réception de l'information DV contribuent au caractère "aléatoire" de la génération des données de référence.

Bien entendu, dans la variante illustrée sur la figure 7, concernant des tirages au sort successifs de données de référence, la réception de l'information d'autorisation de jeu DV n'a pour seul effet que l'activation des moyens de traitement de boîtier, et le déverrouillage de celui-ci afin de le rendre apte au jeu.

Le joueur est maintenant en possession d'un boîtier avec lequel il peut jouer.

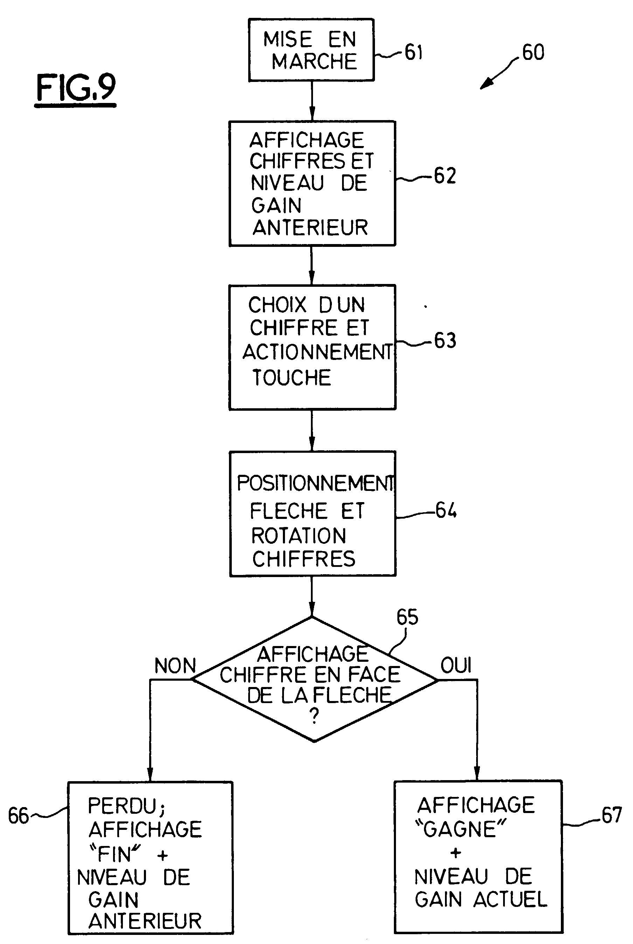

La phase de jeu proprement dite 60, correspondant ici à un exemple bien particulier de jeu, est illustrée plus en détail sur la figure 9. Lors de la mise en marche du boîtier (étape 61) par pression sur la touche 24, l'écran 28 affiche (étape 62) les chiffres 1, 2 et 3 dans les emplacements N1, N2 et N3 ainsi que le niveau de gain antérieur. Si le joueur n'a jamais joué avec ce boîtier, il n'y a bien entendu aucun affichage de niveau de gain antérieur.

Dans l'étape 63, le joueur choisi un chiffre et actionne la touche 25-27 correspondante ce qui matérialise l'introduction de sa donnée de jeu. La flèche F, en regard de l'emplacement N1, N2 ou N3 correspondant au chiffre choisi par le joueur, s'affiche et les moyens de traitement-boîtier activent alors un logiciel d'animation visuelle, communément appelé "chenillard" par l'homme du métier, et ayant pour effet de provoquer une rotation, sur l'écran d'affichage 28 des chiffres 1, 2 et 3 simulant ainsi le mouvement d'une roulette dans un jeu de roulette. Le chenillard simule ensuite la décélération de la roulette et le chiffre correspondant à la donnée de référence contenue dans le premier compteur de jeu 53-1 s'affiche à l'emplacement correspondant sur l'écran d'affichage 28 (étapes 64, 65).

Si le chiffre s'affiche en face de la flèche F qui matérialisait la donnée de jeu choisie par le joueur (étape 67), celui-ci a gagné. Dans ce cas, l'expression "GAGNE" s'affiche à l'emplacement GA et le niveau de gain 1 s'affiche à l'emplacement NG1. Dans le cas contraire (étape 66), c'est-à-dire si le chiffre correspondant à la donnée de référence ne s'affiche pas en regard de la flèche F, le joueur a perdu et l'expression "FIN" s'affiche dans l'emplacement FI. Dans un tel cas, les moyens de traitement-boîtier verrouillent (étape 68) l'interface de communication avec le joueur en ce sens que celui-ci ne peut plus introduire de donnée de jeu à l'aide des touches 25-27. En d'autres termes, le boîtier est rendu à nouveau inapte au jeu et peut être jeté par exemple.

Dans le cas d'un jeu gagnant, le joueur à deux possibilités. Soit il décide d'arrêter de jouer et de demander le paiement de son gain en se présentant à une station 12, soit il décide de tenter sa chance une nouvelle fois en choisissant à nouveau une donnée de jeu qu'il introduit à l'aide des touches 24-27. Le déroulement du jeu s'effectue alors à nouveau selon les étapes 63 à 66 ou 67. Dans le mode de réalisation illustré sur la figure 6, le contenu du compteur de gain, permet de sélectionner la voie d'entrée du multiplexeur 54 puisque ce compteur de gain comporte une information de gain différente pour chaque essai gagnant du joueur. Aussi, dans le cas présent, lors du deuxième essai, le deuxième compteur 53-2 de la chaîne sera sélectionné et son contenu correspondant à la deuxième valeur de référence sera comparé à la donnée de jeu introduite par le joueur. Le joueur peut ainsi tenter sa chance dix fois de suite pour espérer atteindre le niveau de gain 10. A chaque nouvel essai gagnant, son niveau de gain actuel s'affiche et est supérieur au niveau de gain précédent. Par contre, si au cours de ce cheminement, un essai devient perdant, le boîtier devient inapte au jeu et le niveau de gain précédent reste affiché. Bien entendu, le joueur ne peut tenter un essai suivant que s'il a réussi à l'essai précédent, c'est à dire si il y avait concordance entre la donnée de référence associée à son essai précédent et la donnée de jeu qu'il avait alors introduite.

Dans le mode de réalisation illustré sur la figure 7, les dix données de référence correspondant aux dix niveaux de gain ne sont pas prédéterminées à l'avance. Le compteur 53 fonctionne jusqu'à l'actionnement d'une touche 24-27 par le joueur matérialisant son choix d'une donnée de jeu. Cette action ACJ bloque alors le compteur 53 à une valeur définissant à la valeur de référence générée aléatoirement et associée à l'introduction de la donnée de jeu par le joueur lors de son essai. Après l'affichage d'un résultat gagnant éventuelle, le fonctionnement du compteur 53 se poursuit et celui-ci sera à nouveau figé à une autre valeur lors de l'introduction éventuelle ultérieure d'une autre donnée de jeu par le joueur.

La variante de la figure 7 est également compatible avec un autre type de jeu consistant cette fois ci à comparer des données de référence constantes prédéterminées et stockées en mémoire, avec des données de jeu introduites de façon aléatoire par le joueur. On simule ainsi un lancement de dés par le joueur. Dans ce cas, la réception du signal à ACJ, provoqué par l'actionnement d'une touche appropriée sur le boîtier par le joueur, provoque l'arrêt du compteur 53 matérialisant la génération aléatoire de la donnée de jeu qui sera ensuite comparée à la valeur de référence (désignée ici également par VJ) stockée en mémoire.

Dans le cas où un joueur ayant gagné et ayant atteint un certain niveau de gain, décide de ne plus jouer et de demander le paiement de ce gain, il procède alors à une demande de paiement 69 auprès d'une station 12 qui va procéder alors à une phase de vérification approfondie 70. n convient de noter ici que le joueur peut demander ce paiement auprès de la même station qui lui a vendu son boîtier ou auprès d'une station homologue.

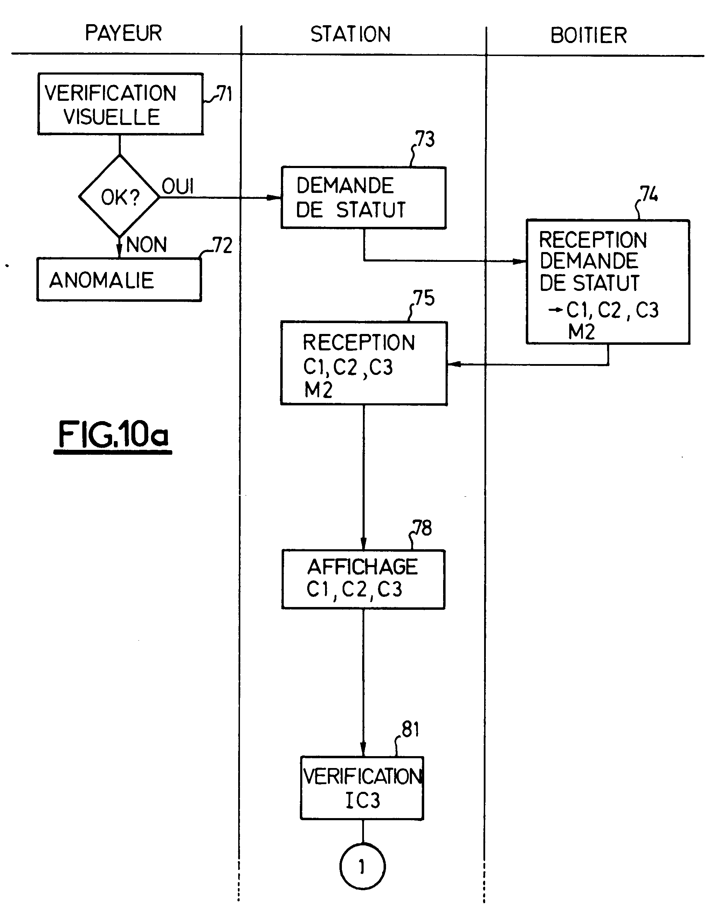

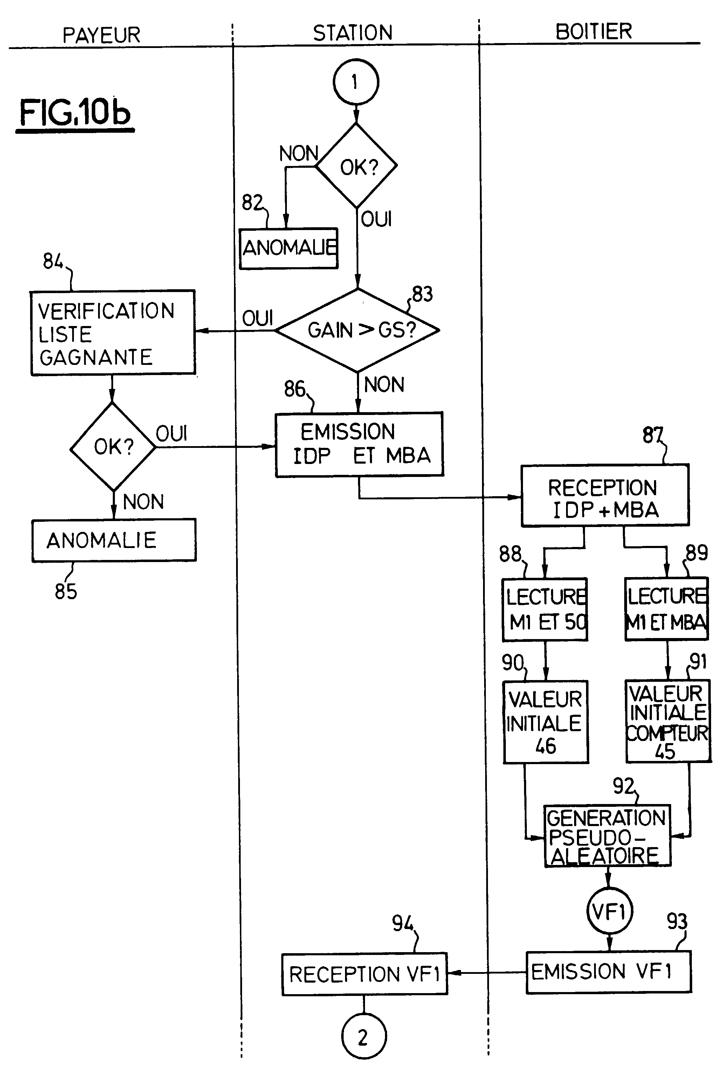

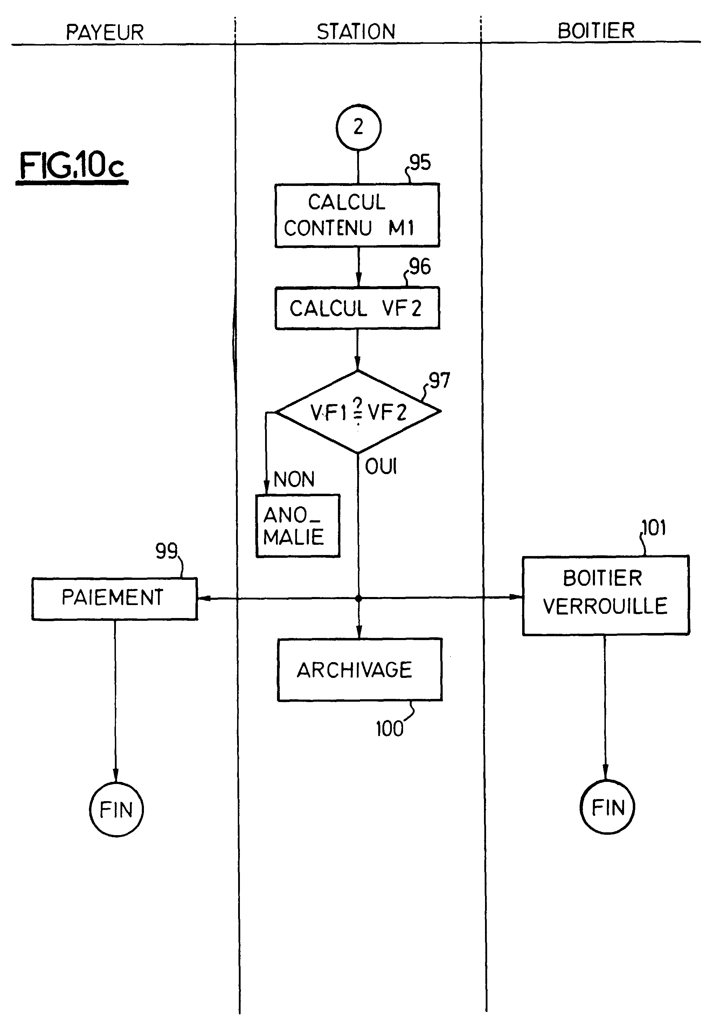

On se réfère maintenant plus particulièrement aux figures 10a à 10c pour décrire cette phase de vérification.

Celle-ci commence tout d'abord par une vérification visuelle 71 de la part de l'agent chargé d'effectuer le paiement. Cette vérification visuelle consiste à vérifier l'affichage de l'expression "GAGNE" ainsi que l'affichage d'un niveau de gain. Si aucune anomalie 72 n'apparaît, le boîtier est alors placé sur l'interface 17 d'entrée-sortie de la station et les moyens de traitement-système délivrent au moyen de traitement-boîtier une demande de statut (étape 73). A la réception 74 de cette demande de statut ST1, les moyens de traitement-boîtier délivrent au registre d'entrée-sortie 39 les contenus respectifs C1, C2, C3 des compteurs 48, 49 et 50, ainsi que le contenu de la mémoire M2. Les contenus respectifs C1, C2, C3 sont alors affichés en "clair" sur l'écran 14 de l'interface de dialogue de la station (étape 78). Ceci constitue une autre vérification visuelle qui cependant ne fait pas foi pour le paiement effectif du gain au joueur, comme cela sera expliqué ci-après.

On passe ensuite à une étape de vérification 81 consistant à vérifier la valeur de la deuxième donnée auxiliaire IC3 contenue dans la mémoire M2. Pour celà, les deuxièmes moyens de cryptage auxiliaire 20b des moyens de traitement-système de la station lisent l'information spécifique-station (numéro de série de la station, date de la vente et numéro d'ordre) dans la mémoire M2, et recalculent le certificat IC3 de cette information spécifique pour le comparer à celui contenu dans la mémoire M2.

Une non concordance de ces deux données IC3 conduit encore à une anomalie 82 qui peut interrompre le processus de paiement. Dans le cas contraire, les moyens de traitement-système comparent l'information de gain du compteur de gain 50 à une valeur de gain prédéterminée GS. Si le gain est supérieur à cette valeur GS, les moyens de traitement-système vérifient alors si l'authentifiant du boîtier concemé , c'est à dire son numéro de série, ne se situe pas déjà dans la liste d'authentifiants des boîtiers gagnants et déjà payés. Si tel était le cas, il y aurait encore une anomalie 85 interrompant le processus de paiement. Si la station 12 n'est pas reliée aux moyens de stockage 23 de cette liste, le joueur est prié alors de se rendre auprès d'une station reliée à cette liste. Bien entendu, le joueur peut être prié de changer de station juste après la vérification visuelle 71.

Dans le cas où, soit le gain est inférieur à la valeur GS, soit le gain est supérieur à la valeur GS et le boîtier ne se situe pas dans la liste gagnante, les moyens de traitement-système émettent alors (étape 86) une information de demande de paiement IDP accompagnée d'un mot binaire aléatoire MBA. A la réception 87 de l'information IDP et du mot binaire MBA, par l'interface d'entrée-sortie du boîtier, les moyens de cryptage (44, 45, 46, 47) du boîtier sont aptes à générer une première valeur de gain cryptée VF1 à partir de l'information de gain contenue dans le compteur de gain 50 et de la première donnée auxiliaire IC1 contenue dans la mémoire M1 (étapes 88-92).

Pour celà, le générateur pseudo-aléatoire de cryptage de gain 46 est apte à être initialisé par une valeur initiale et à fonctionner jusqu'à la réception d'une indication d'arrêt. La première valeur de gain cryptée VF1 est alors la valeur délivrée par le générateur pseudo-aléatoire de cryptage de gain 46 à la réception de cette indication d'arrêt.

Le premier circuit logique 47 reçoit comme variable d'entrée l'information de gain contenue dans le compteur de gain 50 et une partie de la première donnée auxiliaire IC1 stockée dans la mémoire M1. Ce premier circuit 47 applique alors une première fonction logique prédéterminée, par exemple à base de OU exclusif, à ces deux variables d'entrée et délivre une première valeur de sortie correspondante, qui définie la valeur initiale du générateur pseudo-aléatoire de cryptage de gain 46.

Le compteur auxiliaire 45 est apte à compter ou décompter depuis une valeur initiale-compteur jusqu'à une valeur finale-compteur. L'indication d'arrêt du fonctionnement du générateur pseudo-aléatoire de cryptage de gain est alors délivré par le compteur auxiliaire 45 lorsque ladite valeur finale-compteur est atteinte.

Le deuxième circuit logique 44 est utilisé ici pour définir la valeur initiale compteur ou la valeur finale compteur selon que le compteur compte ou décompte.

Ce deuxième circuit logique reçoit comme variables d'entrée le mot binaire pseudo-aléatoire MBA et une deuxième partie de la première donnée auxiliaire stockée IC1. Une deuxième fonction logique prédéterminée, de préférence différente de la première, est alors appliquée à ces deux variables d'entrée et le deuxième circuit logique 44, délivre une deuxième valeur de sortie qui définit la valeur initiale-compteur ou la valeur finale-compteur.

Ainsi, le compteur polynominal (par exemple) 46 est initialisé à une valeur initiale dépendant du contenu crypté de la mémoire M1 et de l'information de gain contenue dans le compteur de gain 50. Ce compteur fonctionnera alors jusqu'à ce que le compteur auxiliaire 45 s'arrête, le nombre d'itérations de ce dernier étant défini de façon pseudo-aléatoire à l'aide du mot binaire MBA. Lors de l'arrêt du compteur 46, son contenu, définissant la première valeur de gain cryptée VF1, est délivré aux moyens de traitement-système de la station par l'intermédiaire du registre d'entrée-sortie 39 étapes 93, 94).

Le paiement effectif du gain au joueur ne sera effectué que si cette première valeur de gain cryptée VF1 délivrée par le boîtier, est identique à une deuxième valeur de gain cryptée VF2 établie par les moyens de cryptage-système 19 de la station. A cet effet, les premiers moyens de cryptage auxiliaire 20a de la station recalculent la première donnée auxiliaire cryptée IC1 à partir du numéro de série du boîtier et de la clef secrète correspondante. Ce numéro de série peut être stocké dans la mémoire M1 ou bien lu optiquement par un lecteur optique. A partir de là, les moyens de cryptage-système, comportant des moyens analogues à ceux des moyens de cryptage-boîtier (c'est à dire des circuits logiques et des compteurs analogues aux circuites logiques 44, 47 et aux compteurs 45 et 46), calculent la deuxième valeur de gain cryptée, d'une façon analogue à celle utilisée pour le calcul de la première valeur de gain cryptée VF1, à partir de l'information IC1 recalculée par les premiers moyens de cryptage auxiliaires, et du mot binaire pseudo-aléatoire MBA qui est connu de la station puisque généré par les moyens de génération pseudo-aléatoire-système 22.

En cas de non concordance il y a de nouveau anomalie interrompant le processus de paiement. Par contre, en cas de concordance, le paiement 99 du gain est effectué au joueur, le boîtier est verrouillé (étape 101), le compteur 49 est chargé par une information représentative d'un paiement effectué au joueur et un archivage du numéro de série de ce boîtier gagnant est effectué (étape 100) soit au niveau de la station elle-même soit au niveau des moyens de stockage 23 notamment s'il s'agit d'un gain supérieur à la valeur GS.

Le conditionnement du paiement effectif du gain au joueur par la concordance des deux valeurs de gain cryptées VF1 et VF2 garantit l'organisme payeur contre la fraude provenant notamment de boîtiers falsifiés contenant des micro-processeurs programmés pour simuler des valeurs factices d'information de gain.

Bien que les autres étapes de vérification (demande de statut, vérification des données IC2 et IC3) ne soient pas indispensables, elles contribuent avantageusement à augmenter la sécurité contre la fraude. Par ailleurs, l'homme du métier aura compris que seul le contenu des compteurs 48, 49 et 50 fait foi vis-à-vis de l'organisme payeur, l'affichage de leur contenu sur l'écran 14 ou 28 n'étant qu'une indication visuelle. Aussi, toujours dans le but d'augmenter la sécurité, il est avantageusement prévu que le compteur de gain 50 soit agencé pour contenir successivement des mots binaires de gain prédéterminés représentatifs des informations de gain successives que pourrait obtenir le joueur s'il gagnait successivement à chaque essai. Chaque mot binaire diffère alors du mot précédent et du mot suivant dans la liste par au moins deux bits. Une telle précaution complexifie encore la tâche d'un fraudeur qui souhaiterait modifier le contenu du compteur de gain car il aurait à modifier deux bits à la fois et non un.

La même précaution peut être avantageusement utilisée pour le compteur d'état 48 avec une deuxième liste prédéterminée de mots binaires différant les uns des autres par au moins deux bits. Ceci apporte en plus une double sécurité pour vérifier le niveau de gain obtenu et l'état perdu ou gagnant du jeu à chaque essai.

Enfin, il est possible qu'un joueur désire acheter un boîtier à une tierce personne pour continuer le jeu. Dans ce cas, il est particulièrement avantageux que l'acheteur puisse vérifier le contenu du compteur de gain notamment. Aussi, en présence d'une demande de vérification d'information de gain émanent du joueur acheteur, les moyens de traitement-système sont aptes à lire les contenus des compteurs de gain, d'état et de paiement et à communiquer les résultats de cette lecture sur l'écran 14 de l'interface de dialogue. Bien entendu, dans ce cas, l'information de demande de paiement IDP n'est pas délivrée au boîtier.

## Revendications

1. Dispositif électronique de jeu de hasard, comprenant
a) un boîtier portable (11) comprenant
- une interface-boîtier d'entrée/sortie (39, 29, 30) apte à recevoir une information prédéterminée d'autorisation de jeu sans laquelle le boîtier est inapte au jeu,
- une interface de communication (24, 25, 26, 27, 28) avec le joueur,
- des moyens de mémoire (M1, M2, 53-1,... 53-10, 48, 49, 50) aptes à stocker au moins une donnée de référence,
- des moyens de traitement-boîtier, comportant
. des moyens de comparaison (55) aptes à comparer ladite donnée de référence avec une donnée de jeu introduite par le joueur par l'interface de communication, l'une de ces deux données étant une valeur générée de façon aléatoire,
. des moyens (50) aptes à établir une information de gain dépendant au moins du résultat de ladite comparaison, et à stocker cette information de gain dans les moyens de mémoire (50), et
. des moyens de cryptage-boîtier (44-47), aptes en réponse à une information prédéterminée de demande de paiement (IDP) reçue par l'interface-boîtier d'entrée/sortie, à établir une première valeur de gain cryptée (VF1) à partir de ladite information de gain et à délivrer cette première valeur cryptée à l'interface-boîtier, et
b) un système de contrôle (12), externe au boîtier (11), comprenant
- une interface-système d'entrée/sortie (17) apte à coopérer avec l'interface boîtier d'entrée/sortie, et
- des moyens de traitement-système (16), aptes,
. en présence d'une demande de paiement émanant du joueur, à lire ladite information de gain contenue dans les moyens de mémoire du boîtier et à délivrer ladite information de demande de paiement (IDP) à l'interface-système d'entrée/sortie, et comportant
. des moyens de cryptage-système (19), homologues des moyens de cryptage-boîtier, aptes à établir une deuxième valeur de gain cryptée (VF2) à partir de ladite information de gain lue, ainsi que des moyens de comparaison aptes à comparer les deux valeurs de gains cryptées,
le paiement effectif du gain au joueur étant conditionné au moins par la concordance des deux valeurs de gain cryptées.

2. Dispositif selon la revendication 1, caractérisé par le fait que la génération aléatoire de l'une des deux données de référence et de jeu est effectuée au sein du boîtier (1).

3. Dispositif selon la revendication 1 ou 2 caractérisé par le fait que les moyens de traitement-système sont aptes à transmettre ladite information prédéterminée d'autorisation de jeu (DV).

4. Dispositif selon la revendication 1, 2 ou 3, caractérisé par le fait que les moyens de traitement-boîtier comportent des premiers moyens de génération aléatoire (53-1,... 53-10) aptes à générer aléatoirement ladite donnée de référence parmi un ensemble prédéterminé de valeurs, tandis que l'interface de communication comporte des moyens d'introduction de données (25-27) permettant au joueur de choisir sa donnée de jeu parmi le même ensemble prédéterminé de valeurs.

5. Dispositif selon la revendication 4, caractérisé par le fait que les premiers moyens de génération aléatoire comportent au moins un compteur de jeu (53-1,... 53-10) fonctionnant depuis un instant initial précédant la réception de ladite information prédéterminée d'autorisation de jeu (DV), ce compteur étant susceptible d'être stoppé à la réception d'une information d'arrêt choisie (DV) et de mémoriser la valeur qu'il présente lors de son arrêt de fonctionnement, cette valeur d'arrêt définissant, ladite donnée de référence.

6. Dispositif selon la revendication 5, caractérisé par le fait que l'information d'arrêt est ladite information d'autorisation de jeu (DV).

7. Dispositif selon la revendication 1, 2 ou 3, caractérisé par le fait que les moyens de traitement-boîtier comportent des deuxièmes moyens de génération aléatoire (53), commandés par l'action du joueur et aptes à délivrer aléatoirement ladite donnée de jeu, la donnée de référence étant une donnée prédéterminée stockée dans les moyens de mémoire.

8. Dispositif selon l'une des revendications précédentes, caractérisé par le fait que les moyens de mémoire (M1) sont aptes à stocker une première donnée auxiliaire prédéterminée, (IC1), et par le fait que les moyens de cryptage-boîtier (44-47) sont aptes à générer la première valeur de gain cryptée (VF1) à partir de ladite information de gain et de ladite première donnée auxiliaire (IC1).

9. Dispositif selon la revendication 8, caractérisé par le fait que la première donnée auxiliaire est obtenue à partir d'un premier cryptage auxiliaire d'au moins une première information (NS) spécifique au boîtier, et est présente dans les moyens de mémoire (M1) avant la réception de l'information d'autorisation de jeu (DV).

10. Dispositif selon la revendication 8 ou 9, caractérisé par le fait que les moyens de cryptage-boîtier comportent:
- un générateur pseudo-aléatoire de cryptage de gain (46) apte à être initialisé par une valeur initiale et à fonctionner jusqu'à la réception d'une indication d'arrêt, la première valeur de gain cryptée (VF1) étant alors la valeur délivrée par le générateur pseudo-aléatoire de cryptage de gain à la réception de ladite indication d'arrêt,
- un premier circuit logique (47) apte à recevoir comme variables d'entrée ladite information de gain et une partie au moins de la première donnée auxiliaire stockée (IC1), à appliquer une première fonction logique prédéterminée à ces deux variables d'entrée et à délivrer une première valeur de sortie correspondante, définissant ladite valeur initiale du générateur pseudo-aléatoire de cryptage de gain, et
- un compteur auxiliaire (45) apte à compter ou décompter depuis une valeur initiale-compteur jusqu'à une valeur finale-compteur, ladite indication d'arrêt du fonctionnement du générateur pseudo-aléatoire de cryptage de gain (46) étant délivrée par le compteur auxiliaire lorsque ladite valeur finale-compteur est atteinte.

11. Dispositif selon la revendication 10, caractérisé par le fait que les moyens de cryptage-boîtier comprennent un second circuit logique (44) apte à recevoir comme variable d'entrée un mot binaire pseudo-aléatoire (MBA) et une deuxième partie au moins de la première donnée auxiliaire stockée (IC1), à appliquer une deuxième fonction logique prédéterminée à ces deux variables d'entrée et à délivrer une deuxième valeur de sortie correspondante, définissant ladite valeur initiale compteur ou ladite valeur finale compteur.

12. Dispositif selon l'une des revendications 8 à 10, caractérisé par le fait que les moyens de traitement-système comportent des moyens de génération pseudo-aléatoire-système (22) aptes à générer ledit mot binaire pseudo-aléatoire, ce mot binaire pseudo-aléatoire accompagnant ladite information de demande de paiement (IDP).

13. Dispositif selon la revendication 12 prise en combinaison avec la revendication 9, caractérisé par le fait que les moyens de traitement-système comportent des premiers moyens de cryptage auxiliaires (20a) aptes à effectuer ledit premier cryptage auxiliaire de ladite première information spécifique (NS) pour recalculer la valeur de la première donnée auxiliaire (IC1), par le fait que les moyens de cryptage-système comportent des moyens analogues à ceux des moyens de cryptage-boîtier
et par le fait que les moyens de cryptage-système sont aptes à déterminer la deuxième valeur de gain cryptée (VF2) à partir de la valeur de la première donnée auxiliaire recalculée (IC1) et du mot binaire pseudo-aléatoire (MBA).

14. Dispositif selon l'une des revendications précédentes, caractérisé par le fait que les moyens de mémoire sont aptes à stocker une deuxième donnée auxiliaire prédéterminée (IC3), et par le fait qu'en présence de la demande de paiement émanant du joueur, les moyens de traitement-système sont aptes à effectuer un traitement de vérification (81) de la valeur de cette deuxième donnée auxiliaire, avant de délivrer ladite information de demande de paiement au boîtier.

15. Dispositif selon la revendication 14, caractérisé par le fait que les moyens de traitement-système comportent des deuxièmes moyens de cryptage auxiliaires (20b) aptes à effectuer un deuxième cryptage auxiliaire d'une deuxième information spécifique au système de contrôle, pour déterminer la deuxième donnée auxiliaire (IC3) au plus tard à la réception de ladite information d'autorisation de jeu, par le boîtier,
par le fait que les moyens de traitement-système sont aptes à stocker ladite deuxième information spécifique et la deuxième donnée auxiliaire (IC3) dans les moyens de mémoire (M2),
par le fait que les deuxièmes moyens de cryptage auxiliaires sont aptes à lire la deuxième information spécifique et la deuxième donnée auxiliaire dans les moyens de mémoire du boîtier, et à comparer la valeur de la deuxième donnée auxiliaire lue avec celle recalculée par les deuxièmes moyens de cryptage auxiliaires à partir de la deuxième information spécifique lue.

16. Dispositif selon l'une des revendications précédentes caractérisé par le fait que les moyens de mémoire sont aptes à stocker, avant la réception de ladite information d'autorisation de jeu, une donnée d'authentification du boîtier (IC2),
et par le fait que la réception de ladite information d'autorisation de jeu est conditionnée à la vérification de cette donnée d'authentification.

17. Dispositif selon la revendication 16, caractérisé par le fait que la donnée d'authentification résulte d'un cryptage d'authentification d'une troisième information spécifique au boîtier (NS),
par le fait que les moyens de traitement-système comportent des moyens de cryptage d'authentification (21) aptes à recalculer la donnée d'authentification (IC2) à partir de la troisième information spécifique pour vérifier la valeur de cette troisième information spécifique lue dans les moyens de mémoire (M2).

18. Dispositif selon l'une des revendications 9 à 17, caractérisé par le fait que le premier et deuxième cryptage auxiliaire ainsi que le cryptage d'authentification comportent des algorithmes de cryptage à clé, et par le fait que la deuxième donnée auxiliaire et la donnée d'authentification sont des certificats cryptés des deuxième et troisième informations spécifiques.

19. Dispositif selon l'une des revendications 9 à 18, caractérisé par le fait que les première et troisième informations spécifiques comportent un authentifiant spécifique au boîtier tel que le numéro de série du boîtier, et par le fait que les moyens de traitement-système comportent des moyens de lecture du numéro de série.

20. Dispositif selon l'une des revendications précédentes, caractérisé par le fait que les moyens de mémoire comportent deux mémoires (M1, M2), l'une d'entre elles contenant la première donnée auxiliaire, l'autre contenant d'abord la donnée d'authentification (IC2) puis, après vérification de cette dernière, la deuxième donnée auxiliaire (IC3).

21. Dispositif selon l'une des revendications précédentes, caractérisé par le fait que les moyens de mémoire comportent un compteur d'état (48) apte à contenir une information d'état représentative du résultat du jeu, ainsi qu'un compteur de paiement (49) apte à contenir une information de paiement représentative d'un paiement déjà effectué ou non encore effectué au joueur,
par le fait, qu'en présence de la demande de paiement émanant du joueur, les moyens de traitement-système sont aptes à lire en outre les contenus des compteurs d'état et de paiement avant de délivrer ladite information de demande de paiement au boîtier.

22. Dispositif selon l'une des revendications précédentes, caractérisé par le fait qu'il comporte des moyens d'alimentation (35, 36) autorisant le fonctionnement de certains au moins des moyens du boîtier avant la réception de l'information d'autorisation de jeu.

23. Dispositif selon l'une des revendications précédentes, caractérisé par le fait que le boîtier est inapte au jeu à la suite d'une comparaison entre une donnée de référence et une donnée de jeu représentative d'un jeu perdant et/ou après un paiement effectif au joueur.

24. Dispositif selon l'une des revendications précédentes, caractérisé par le fait que l'interface de communication comporte des moyens (28) de restitution au joueur d'une information de résultat représentative du résultat de la comparaison entre les données de jeu et de référence, lui indiquant s'il a perdu ou gagné.

25. Dispositif selon l'une des revendication précédentes, caractérisé par le fait que les moyens de mémoire sont aptes à stocker une pluralité de données de référence, et
par le fait qu'une pluralité de données de jeu sont susceptibles d'être introduites par le joueur.

26. Dispositif selon la revendication 25, caractérisé par le fait que les données de jeu sont introduites successivement, chaque donnée de jeu introduite étant comparée à une donnée de référence prédéterminée,
et par le fait qu'une donnée de jeu ne peut être introduite par l'interface de communication qu'en cas d'une concordance entre la donnée de jeu précédemment introduite et la donnée de référence correspondante,
et par le fait qu'à chaque concordance correspond une information de gain différente (NG1,... NG10).

27. Dispositif selon les revendications 24 et 26, caractérisé par le fait que l'information de résultat comporte l'affichage d'une information de niveau de gain correspondant à l'information de gain contenue dans les moyens de mémoire.

28. Dispositif selon l'une des revendications 25 à 27, caractérisé par le fait que les moyens de mémoire comportent un compteur de gain (50) apte à contenir successivement des mots binaires de gain prédéterminés représentatifs des informations de gain successives, chaque mot binaire différant du mot suivant et du mot précédent par au moins deux bits.

29. Dispositif selon l'une des revendications 25 à 28, prise en combinaison avec la revendicafion 21, caractérisé par le fait que le compteur d'état (48) est apte à contenir successivement des mots binaires d'état prédéterminés représentatifs des informations d'état successives, chaque mot binaire d'état différant du mot suivant et du mot précédent par au moins deux bits.

30. Dispositif selon l'une des revendications précédentes prise en combinaison avec les revendications 5 et 25, caractérisé par le fait que les premiers moyens de génération aléatoire comportent une pluralité de compteurs de jeu (53-1,... 53-10), chaque compteur étant susceptible de contenir une donnée de référence et est associé à une introduction de donnée de jeu par le joueur.

31. Dispositif selon la revendication 30, caractérisé par le fait que la réception de ladite information d'autorisation de jeu (DV) stoppe le fonctionnement des compteurs, la pluralité de données de référence étant alors la pluralité de valeurs qu'avaient les compteurs à la réception de cette information d'autorisation de jeu.

32. Dispositif selon l'une des revendications 1 à 29 prise en combinaison avec les revendications 5 et 26, caractérisé par le fait que le compteur est associé à toutes les introductions successives des données de jeu par le joueur, et par le fait que l'introduction d'une donnée de jeu par le joueur fige le compteur correspondant à une valeur définissant la valeur de référence associée à cette donnée de jeu.

33. Dispositif selon l'une des revendications précédentes, caractérisé par le fait que le système de contrôle comporte une interface de dialogue (14, 15) apte à recevoir ladite demande de paiement émanant du joueur.

34. Dispositif selon la revendication 33, caractérisé par le fait qu'en présence d'une demande de vérification d'information de gain émanant du joueur, les moyens de traitement-système sont aptes à lire les contenus des compteurs de gain, d'état, et de paiement et à communiquer les résultats de cette lecture sur l'interface de dialogue.

35. Dispositif selon l'une des revendications précédentes, caractérisé par le fait qu'en présence d'une demande de paiement émanant du joueur, les moyens de traitement-système sont aptes à transmettre à l'interface-système d'entrée/sortie une demande de statut (ST1) en réponse à laquelle les moyens de traitement-boîtier délivrent ladite information de gain à l'interface-boîtier d'entrée/sortie.

36. Dispositif selon l'une des revendications précédentes, caractérisé par le fait que le système de contrôle comporte au moins une station, telle qu'un terminal.

37. Dispositif selon les revendications 15 et 36, caractérisé par le fait que la deuxième information spécifique comporte le numéro de série de la station, la date de la vente du boîtier au joueur et le numéro d'ordre de cette vente à cette date.

38. Dispositif selon la revendication 36 ou 37, caractérisé par le fait que le système de contrôle comporte une pluralité de stations de structure analogue, les informations d'autorisation de jeu et de demande de paiement pouvant être délivrées par la même station ou par deux stations différentes.

39. Dispositif selon l'une des revendications 36 à 38, caractérisé par le fait que chaque boîtier possède un authentifiant unique, par le fait que le système de contrôle comporte des moyens de stockage (23) d'une liste d'authentifiants des boîtiers gagnants et payés,
par le fait qu'en présence d'une demande de paiement émanant du joueur et correspondant à un gain supérieur à une valeur de gain prédéterminée, les moyens de traitement-système sont aptes à vérifier si l'authentifiant du boîtier concerné se situe déjà dans ladite liste.

40. Dispositif selon l'une des revendications précédentes, caractérisé par le fait que le boîtier comporte un circuit intégré câblé (37) incorporant les moyens de traitement-boîtier et les moyens de mémoire du boîtier.

## Patentansprüche

1. Elektronische Glücksspiel-Vorrichtung, umfassend
a) ein tragbares Gerät (11) umfassend
- eine Eingangs-/Ausgangsschnittstelle des Geräts (39, 29, 30) zum Empfang einer vorbestimmten Spielberechtigungsinformation, ohne die das Gerät spielunfähig ist,
- eine Kommunikationsschnittstelle (24, 25, 26, 27, 28) zum Spieler,
- Speichereinrichtungen (M1, M2, 53-1, ... 53,10, 48, 49, 50) zur Speicherung wenigstens eines Referenzwerts,
- Verarbeitungseinrichtungen des Geräts, umfassend
. Vergleichseinrichtungen (55), zum Vergleich des Referenzwerts mit einem vom Spieler über die Kommunikationsschnittstelle eingegebenen Spielwert, wobei einer dieser zwei Werte ein zufällig erzeugter Wert ist,
. Einrichtungen (50) zur Aufnahme einer von wenigstens dem Vergleichsresultat abhängigen Gewinninformation und zur Speicherung dieser Gewinninformation in den Speichereinrichtungen (50), und
. Codiereinrichtungen des Geräts (44 - 47) zur Beantwortung einer vorbestimmten Auszahlungsanforderungs-Information (IDP), die über die Eingangs-/Ausgangsschnittstelle des Geräts empfangen wurde, zur Angabe eines ersten codierten Gewinnwerts (VF1) der Gewinninformation und zur Übermittlung dieses ersten codierten Werts zur Schnittstelle des Geräts, und
.
b) ein geräteexternes(11) Kontrollsystem (12), umfassend
- eine Eingangs-/Ausgangsschnittstelle des Systems (17), die mit der Eingangs-/Ausgangsschnittstelle des Geräts zusammenwirken kann und
- Verarbeitungseinrichtungen des Systems (16), die
. bei Vorliegen einer Auszahlungsanforderung seitens des Spielers, die in den Speichereinrichtungen des Geräts enthaltene Gewinninformation auslesen und die Information der Auszahlungsanforderung (IDP) an die Eingangs-/Ausgangsschnittstelle des Systems übermitteln kann, und
. Codiereinrichtungen des Systems (19), entsprechend den Codiereinrichtungen des Geräts, die einen zweiten codierten Gewinnwert (VF2) aus der gelesenen Gewinninformation aufnehmen können, sowie Vergleichseinrichtungen, welche die zwei codierten Gewinnwerte vergleichen können, umfassen
. wobei die effektive Gewinnauszahlung an den Spieler wenigstens durch Übereinstimmung der zwei codierten Gewinnwerte bedingt ist.

2. Vorrichtung nach Anspruch 1,
**dadurch gekennzechnet, daß**
die Zufallserzeugung eines der Referenz- und Spielwerte innerhalb des Geräts (1) bewirkt wird.

3. Vorrichtung nach einem der Ansprüche 1 oder 2,
**dadurch gekennzeichnet, daß**
die Verarbeitungseinrichtungen des Systems die vorbestimmte Spielberechtigungsinformation (DV) übertragen können.

4. Vorrichtung nach einem der Ansprüche 1, 2 oder 3,
**dadurch gekennzeichnet, daß**
die Verarbeitungseinrichtungen des Geräts erste Zufallserzeugungseinrichtungen (53-1 ..., 53-10) umfassen, die zur Zufallserzeugung des Referenzwerts aus einer vorbestimmten Wertmenge geeignet sind, wogegen die Kommunikationsschnittstelle Einrichtungen zur Eingabe der Werte (25-27) umfaßt, die dem Spieler ermöglichen, seinen Spielwert unter der gleichen vorbestimmten Wertmenge auszuwählen.

5. Vorrichtung nach Anspruch 4,
**dadurch gekennzeichnet, daß**
die ersten Zufallsgenerationseinrichtungen wenigstens einen Spielzähler (53-1,... 53-10) umfassen, der von Anfang an, vor dem Empfang der vorbestimmten Spielberechtigungsinformation (DV) arbeitet, der Zähler beim Empfang einer gewählten Halte-Information (DV) gestoppt werden und der Wert, den er beim Anhalten angibt, gespeichert werden kann, wobei dieser Haltewert den Referenzwert bestimmt.

6. Vorrichtung nach Anspruch 5,
**dadurch gekennzeichnet, daß**
die Halte-Information die Spielberechtigungsinformation (DV) ist.

7. Vorrichtung nach einem der Ansprüche 1, 2 oder 3,
**dadurch gekennzeichnet, daß**
die Verarbeitungseinrichtungen des Geräts die zweiten Zufallserzeugungseinrichtungen (53) umfassen, die durch die Aktion des Spielers gesteuert werden und einen zufälligen Spielwert liefern können, wobei der Referenzwert ein vorbestimmter Wert ist, der in den Speichereinrichtungen gespeichert ist.

8. Vorrichtung nach einem der vorhergehenden Ansprüche,
**dadurch gekennzeichnet, daß**
die Speichereinrichtungen (M1) einen ersten vorbestimmten Hilfswert (IC1) speichern und die Codiereinrichtungen des Geräts (44-47) einen ersten codierten Gewinnwert (VF1) aus der Gewinninformation und dem ersten Hilfswert (IC1) erzeugen können.

9. Vorrichtung nach Anspruch 8,
**dadurch gekennzeichnet, daß**
der erste Hilfswert aus einem ersten Hilfscode aus wenigstens einer ersten spezifischen Information (NS) des Geräts erhalten wird und in den Speichereinrichtungen (M1) vor dem Empfang der Spielberechtigungsinformation (DV) vorliegt.

10. Vorrichtung nach einem der Ansprüche 8 oder 9,
**dadurch gekennzeichnet, daß**
die Codiereinrichtungen des Geräts umfassen:
- einen Pseudo-Zufalls-Gewinncode-Generator (46), der auf einen Anfangswert initialisiert werden kann und bis zum Empfang eines Haltesignals arbeitet, wobei der erste codierte Gewinnwert (VF1) dann der vom Pseudo-Zufalls-Gewinncode-Generator bei Empfang des Haltesignals gelieferte Wert ist,
- einen ersten Logikschaltkreis (47), der als Eingangsvariablen die Gewinninformation und wenigstens einen ersten Teil des gespeicherten Hilfswerts (IC1) erhält, eine erste vorbestimmte Logikfunktion auf diese zwei Eingangsvariablen anwendet und einen entsprechenden ersten Ausgangswert liefert, der den Anfangswert des Pseudo-Zufalls-Gewinncode-Generators bestimmt, und
- einen Hilfszähler (45), der von einem Anfangszählwert bis zu einem Endzählwert aufwärts oder abwärts zählen kann, wobei das Betriebshaltesignal des Pseudo-Zufalls-Gewinncode-Generators (46) vom Hilfszähler geliefert wird, wenn dieser Endzählwert erreicht wurde.

11. Vorrichtung nach Anspruch 10,
**dadurch gekennzeichnet, daß**
die Codiereinrichtungen des Geräts einen zweiten Logikschaltkreis (44) umfassen, der als Eingangsvariablen ein binäres Pseudo-Zufallswort (MBA) und wenigstens einen zweiten Teil des ersten gespeicherten Hilfswerts (IC1) erhalten kann, eine zweite vorbestimmte Logikfunktion auf die zwei Eingangsvariablen anwenden und einen zweiten entsprechenden Ausgangswert liefern kann, der den Anfangszählwert oder den Endzählwert bestimmt.

12. Vorrichtung nach einem der Ansprüche 8 bis 10,
**dadurch gekennzeichnet, daß**
die Verarbeitungseinrichtungen des Systems Pseudo-Zufalls-Generationseinrichtungen des Systems (22) umfassen, die das binäre Pseudo-Zufallswort erzeugen können, wobei das binäre Pseudo-Zufallswort die Information der Auszahlungsanforderung (IDP) begleitet.

13. Vorrichtung nach Anspruch 12, in Kombination mit Anspruch 9,
**dadurch gekennzeichnet, daß**
die Verarbeitungseinrichtungen des Systems erste Hilfs-Codiereinrichtungen (20a) umfassen, welche die erste Hilfscodierung der ersten spezifischen Information (NS) bewirken, um den Wert des ersten Hilfswerts (IC1) neu zu berechnen, und die Codiereinrichtungen des Systems analoge Einrichtungen zu den Codiereinrichtungen des Geräts aufweisen, und die Codiereinrichtungen des Systems den zweiten codierten Gewinnwert (VF2) aus einem neu berechneten Wert des ersten Hilfswerts (IC1) und aus dem binären Pseudo-Zufallswort (MBA) bestimmen können.

14. Vorrichtung nach einem der vorhergehenden Ansprüche,
**dadurch gekennzeichnet, daß**
die Speichereinrichtungen einen zweiten vorbestimmten Hilfswert (IC3) speichern können und bei Vorliegen der Auszahlungsanforderung seitens des Spielers die Verarbeitungseinrichtungen des Systems eine Überprüfung (81) des Werts dieses zweiten Hilfswerts vor dem Übermitteln dieser Auszahlungsanforderungs-Information an das Gerät bewirken können.

15. Vorrichtung nach Anspruch 14,
**dadurch gekennzeichnet, daß**
die Verarbeitungseinrichtungen des Systems zweite Hilfs-Codiereinrichtungen (20b) umfassen, die eine zweite Hilfscodierung einer zweiten spezifischen Information des Kontrollsystems bewirken können, um den zweiten Hilfswert (IC3) nach Erhalt der Spielberechtigungsinformation vom Gerät bewirken können,
und die Verarbeitungseinrichtungen des Systems die zweite spezifische Information und den zweiten Hilfswert (IC3) in den Speichereinrichtungen (M2) speichern können,
und die zweiten Hilfs-Codiereinrichtungen die zweite spezifische Information und den zweiten Hilfswert aus den Speichereinrichtungen des Geräts lesen und den Wert des zweiten gelesenen Hilfswerts mit dem von den zweiten Hilfs-Codiereinrichtungen aus der zweiten spezifischen Information gelesenen, neu berechneten Wert vergleichen können.

16. Vorrichtung nach einem der vorhergehenden Ansprüche,
**dadurch gekennzeichnet, daß**
die Speichereinrichtungen vor dem Erhalt der Spielberechtigungsinformation einen Berechtigungswert des Geräts (IC2) speichern können,
und der Empfang der Spielberechtigungsinformation durch die Überprüfung dieses Berechtigungswerts bedingt ist.

17. Vorrichtung nach Anspruch 16,
**dadurch gekennzeichnet, daß**
der Berechtigungswert aus einer Berechtigungs-Codierung einer dritten gerätespezifischen Information (NS) resultiert,
und die Verarbeitungseinrichtungen des Systems Berechtigungs-Codiereinrichtungen (21) umfassen, die den Berechtigungswert (IC2) aus der dritten spezifischen Information neu berechnen können, um den Wert dieser dritten, aus den Speichereinrichtungen (M2) gelesenen spezifischen Information, zu überprüfen.

18. Vorrichtung nach einem der Ansprüche 9 bis 17,
**dadurch gekennzeichnet, daß**
die erste und zweite Hilfscodierung sowie die Berechtigungscodierung Verschlüsselungsalgorithmen umfassen, und der zweite Hilfswert und der Berechtigungswert codierte Nachweise der zweiten und dritten spezifischen Informationen sind.

19. Vorrichtung gemäß einem der Ansprüche 9 bis 18,
**dadurch gekennzeichnet, daß**
die erste und dritte spezifische Information eine gerätespezifische Berechtigung sowie die Seriennummer des Geräts umfassen, und die Verarbeitungseinrichtungen des Systems Leseeinrichtungen zum Lesen der Seriennummer umfassen.

20. Vorrichtung gemäß einem der vorhergehenden Ansprüche,
**dadurch gekennzeichnet, daß**
die Speichereinrichtungen zwei Speicher (M1, M2) umfassen, von denen einer den ersten Hilfswert enthält, der andere zunächst den Berechtigungswert (IC2) enthält, und dann, nach der Überprüfung des letzteren, den zweiten Hilfswert (IC3).

21. Vorrichtung gemäß einem der vorhergehenden Ansprüche,
**dadurch gekennzeichnet, daß**
die Speichereinrichtungen einen Zustandszähler (48) umfassen, der eine Zustandsinformation enthalten kann, die das Spielresultat darstellt, sowie einen Auszahlungszähler (49), der eine Auszahlungsinformation enthalten kann, welche die bereits ausgeführte oder noch nicht ausgeführte Auszahlung an den Spieler darstellt,
und bei Vorliegen einer Auszahlungsanforderung seitens des Spielers die Verarbeitungseinrichtungen des Systems außerdem den Inhalt der Zustands- und Auszahlungszähler vor der Übermittlung der Auszahlungsanforderungsinformation an das Gerät, auslesen können.

22. Vorrichtung nach einem der vorhergehenden Ansprüche,
**dadurch gekennzeichnet, daß**
sie Versorgungseinrichtungen (35, 36) umfaßt, welche die Funktion wenigstens bestimmter Geräteeinrichtungen vor dem Erhalt der Spielberechtigungsinformation zuläßt.

23. Vorrichtung nach einem der vorhergehenden Ansprüche,
**dadurch gekennzeichnet, daß**
das Gerät nach einem Vergleich zwischen einem Referenzwert und einem Spielwert, der ein verlorenes Spiel ergibt und/oder nach einer Auszahlung an den Spieler, spiel unfähig ist.

24. Vorrichtung nach einem der vorhergehenden Ansprüche,
**dadurch gekennzeichnet, daß**
die Kommunikationsschnittstelle Wiedergabeeinrichtungen (28) für den Spieler mit einer Ergebnisinformation umfaßt, die das Ergebnis eines Vergleichs zwischen dem Spielwert und dem Referenzwert darstellt, und ihm anzeigt, ob er verloren oder gewonnen hat.

25. Vorrichtung nach einem der vorhergehenden Ansprüche,
**dadurch gekennzeichnet, daß**
die Speichereinrichtungen mehrere Referenzwerte speichern können, und mehrere Spielwerte vom Spieler eingegeben werden können.

26. Vorrichtung nach Anspruch 25,
**dadurch gekennzeichnet, daß**
die Spielwerte sukzessive eingegeben werden, wobei jeder eingegebene Spielwert mit einem vorbestimmten Referenzwert verglichen wird,
und ein Spielwert über die Kommunikationsschnittstelle nicht eingegeben werden kann, außer im Fall der Übereinstimmung zwischen dem vorhergehend eingegebenen Spielwert und dem entsprechenden Referenzwert,
und jede Übereinstimmung einer unterschiedlichen Gewinninformation (NG1... NG10) entspricht.

27. Vorrichtung nach den Ansprüchen 24 und 26,
**dadurch gekennzeichnet, daß**
die Ergebnisinformation die Anzeige einer Gewinniveau-lnformation umfaßt, entsprechend der in den Speichereinrichtungen enthaltenen Gewinninformation.

28. Vorrichtung nach einem der Ansprüche 25 bis 27,
**dadurch gekennzeichnet, daß**
die Speichereinrichtungen einen Gewinnzähler (50) umfassen, der sukzessive vorbestimmte binäre Gewinnwörter enthalten kann, die sukzessive Gewinninformationen darstellen, wobei jedes binäre Wort sich vom nachfolgenden und vom vorhergehenden Wort durch wenigstens zwei Bits unterscheidet.

29. Vorrichtung gemäß einem der Ansprüche 25 bis 28 in Kombination mit Anspruch 21,
**dadurch gekennzeichnet, daß**
der Zustandszähler (48) sukzessive vorbestimmte binäre Zustandswörter enthalten kann, welche sukzessive Zustandsinformationen repräsentieren, wobei sich jedes binäre Zustandswort vom folgenden und vorhergehenden Wort durch wenigstens zwei Bits unterscheidet.

30. Vorrichtung nach einem der vorhergehenden Ansprüche in Kombination mit den Ansprüchen 5 und 25,
**dadurch gekennzeichnet, daß**
die ersten Zufallsgeneratoren mehrere Spielzähler umfassen (531,... 53-10), wobei jeder Zustandszähler, der einen Referenzwert enthalten kann, mit der Eingabe des Spielwerts durch den Spieler verbunden ist.

31. Vorrichtung nach Anspruch 30,
**dadurch gekennzeichnet, daß**
der Empfang der Spielberechtigungsinformation (DV) die Funktion der Zähler stoppt, wobei die Vielzahl der Referenzwerte dann die Vielzahl der Werte ist, die die Zähler beim Empfang dieser Spielberechtigungsinformation hatten.

32. Vorrichtung nach einem der Ansprüche 1 bis 29 in Kombination mit den Ansprüchen 5 und 26,
**dadurch gekennzeichnet, daß**
der Zähler mit allen sukzessiven Eingaben von Spielwerten durch den Spieler verbunden ist, und die Eingabe eines Spielwerts durch den Spieler den betreffenden Zähler auf einen definierten Referenzwert setzt, der mit dem Spielwert verknüpft ist.

33. Vorrichtung nach einem der vorhergehenden Ansprüche,
**dadurch gekennzeichnet, daß**
das Kontrollsystem eine Dialogschnittstelle (14, 15) umfaßt, welche die Auszahlungsanforderung seitens des Spielers empfangen kann.

34. Vorrichtung gemäß Anspruch 33,
**dadurch gekennzeichnet, daß**
bei Vorliegen einer Anforderung zur Überprüfung der Gewinninformation seitens des Spielers die Verarbeitungseinrichtungen des Systems den Inhalt der Gewinn-, Zustands- und Auszahlungszähler lesen und die Resultate dieser Lesung über die Dialogschnittstelle übermitteln können.

35. Vorrichtung nach einem der vorhergehenden Ansprüche,
**dadurch gekennzeichnet, daß**
bei Vorliegen einer Auszahlungsanforderung seitens des Spielers die Verarbeitungseinrichtungen des Systems eine Statusabfrage (ST1) zur Eingangs-/Ausgangsschnittstelle des Systems übertragen können und als Antwort darauf die Verarbeitungseinrichtungen des Geräts die Gewinninformation an die Eingangs-/Ausgangsschnittstelle des Geräts liefern.

36. Vorrichtung nach einem der vorhergehenden Ansprüche,
**dadurch gekennzeichnet, daß**
das Kontrollsystem wenigstens eine Station, wie z. B. ein Terminal umfaßt.

37. Vorrichtung nach den Ansprüchen 15 und 36,
**dadurch gekennzeichnet, daß**
die zweite spezifische Information die Seriennummern der Station, das Verkaufsdatum des Geräts an den Spieler und die Bestellnummer dieses Verkaufs an diesem Datum umfaßt.

38. Vorrichtung nach einem der Ansprüche 36 oder 37,
**dadurch gekennzeichnet, daß**
das Kontrollsystem mehrere analoge Stationen umfaßt, wobei die Spielberechtigungsinformationen und die Auszahlungsanforderungs information von der gleichen Station oder von verschiedenen Stationen geliefert werden können.

39. Vorrichtung nach einem der Ansprüche 36 bis 38,
**dadurch gekennzeichnet, daß**
jedes Gerät einen Berechtigungsnachweis aufweist, und das Kontrollsystem Speichereinrichtungen (23) mit einer Liste der Berechtigungsnachweise der Gewinn- und ausgezahlten Geräte umfaßt,
und bei Vorliegen einer Auszahlungsanforderung seitens des Spielers und entsprechend einem höherer Gewinn als ein vorbestimmter Gewinnwert vorliegt, die Verarbeitungseinrichtungen des Systems überprüfen können, ob sich die Berechtigung des betreffenden Geräts schon in dieser Liste befindet.

40. Vorrichtung nach einem der vorhergehenden Ansprüche,
**dadurch gekennzeichnet, daß**
das Gerät einen integrierten Schaltkreis (37) mit Verarbeitungseinrichtungen und Speichereinrichtungen des Geräts aufweist.

## Claims

1. Electronic game-of-chance device, comprising
a) a portable box (11) comprising
- a box input/output interface (39, 29, 30) able to receive a predetermined item of game authorization information without which the box is unable to be played,
- an interface (24, 25, 26, 27, 28) for communication with the player,
- memory means (M1, M2, 53-1, ... 53-10, 48, 49, 50) able to store at least one item of reference data,
- box processing means, including
. comparison means (55) able to compare the said reference data item with an item of game data inserted by the player via the communication interface, one of these two data items being a value generated in a random way,
. means (50) able to establish an item of win information depending at least on the result of the said comparison, and to store this win information item in the memory means (50), and
. box encryption means (44-47), able, in response to a predetermined item of payment request information (IDP) received via the box input/output interface, to establish a first encrypted win value (VF1) from the said win information item and to deliver this first encrypted value to the box interface, and
b) a control system (12), external to the box (11), comprising
- a system input/output interface (17) able to cooperate with the box input/output interface, and
- system processing means (16), able,
. in the presence of a payment request originating from the player, to read the said win information item contained in the memory means of the box and to deliver the said payment request information item (IDP) to the system input/output interface, and including
. system encryption means (19), counterparts of the box encryption means, able to establish a second encrypted win value (VF2) from the said win information item read, as well as comparison means able to compare the two encrypted win values,
the actual payment of the win to the player being conditioned at least by agreement of the two encrypted win values.

2. Device according to Claim 1, characterized in that the random generation of one of the two reference and game data items is carried out within the box (1).

3. Device according to Claim 1 or 2, characterized in that the system processing means are able to transmit the said predetermined game authorization information item (DV).

4. Device according to Claim 1, 2 or 3, charac-terized in that the box processing means include first random generation means (53-1, ... 53-10) able randomly to generate the said reference data item among a predetermined set of values, while the communication interface includes data inputting means (25-27) allowing the player to choose his game data item from among the same predetermined set of values.

5. Device according to Claim 4, characterized in that the first random generation means include at least one game counter (53-1, ... 53-10) operating from an initial instant preceding the reception of the said predetermined game authorization information item (DV), this counter being capable of being stopped on reception of a chosen item of stop information (DV) and of memorizing the value which it exhibits upon stopping its operation, this stopping value defining the said reference data item.

6. Device according to Claim 5, characterized in that the stop information item is the said game authorization information item (DV).

7. Device according to Claim 1, 2 or 3, charac-terized in that the box processing means include second random generation means (53), controlled by the action of the player and able randomly to deliver the said game data item, the reference data item being a predetermined item of data stored in the memory means.

8. Device according to one of the preceding claims, characterized in that the memory means (M1) are able to store a first item of predetermined auxiliary data, (IC1), and in that the box encryption means (44-47) are able to generate the first encrypted win value (VF1) from the said win information item and from the said first auxiliary data item (IC1).

9. Device according to Claim 8, characterized in that the first auxiliary data item is obtained from a first auxiliary encryption of at least one first item of information (NS) specific to the box, and is present in the memory means (M1) before reception of the game authorization information item (DV).

10. Device according to Claim 8 or 9, characterized in that the box encryption means include:
- a pseudo-random win encryption generator (46) able to be initialized by an initial value and to operate until reception of a stop indication, the first encrypted win value (VF1) then being the value delivered by the pseudo-random win encryption generator upon reception of the said stop indication,
- a first logic circuit (47) able to receive, as input variables, the said win information item and at least a part of the first auxiliary stored data item (IC1) to apply a first predetermined logic function to these two input variables and to deliver a first corresponding output value, defining the said initial value of the pseudo-random win encryption generator, and
- an auxiliary counter (45) able to count up or count down from a counter initial value to a counter final value, the said indication for stopping the operation of the pseudo-random win encryption generator (46) being delivered by the auxiliary counter when the said counter final value is reached.

11. Device according to Claim 10, characterized in that the box encryption means comprise a second logic circuit (44) able to receive, as input variable, a pseudo-random binary word (MBA) and at least a second part of the first auxiliary stored data item (IC1), to apply a second predetermined logic function to these two input variables and to deliver a second corresponding output value, defining the said counter initial value or the said counter final value.

12. Device according to one of Claims 8 to 10, characterized in that the system processing means comprise system pseudo-random generation means (22) able to generate the said pseudo-random binary word, this pseudo-random binary word accompanying the said payment request information item (IDP).

13. Device according to Claim 12 taken in com-ination with Claim 9, characterized in that the system processing means include first auxiliary encryption means (20a) able to carry out the said first auxiliary encryption of the said first specific information item (NS) in order to recalculate the value of the first auxiliary data item (IC1), in that the system encryption means include means analogous to those of the box encryption means and in that the system encryption means are able to determine the second encrypted win value (VF2) from the value of the first, recalculated, auxiliary data item (IC1) and from the pseudo-random binary word (MBA).

14. Device according to one of the preceding claims, characterized in that the memory means are able to store a second, predetermined, auxiliary item of data (IC3), and in that, in the presence of the payment request originating from the player, the system processing means are able to carry out a verification processing (81) of the value of this second auxiliary data item before delivering the said payment request information item to the box.

15. Device according to Claim 14, characterized in that the system processing means include second auxiliary encryption means (20b) able to carry out a second auxiliary encryption of a second item of information specific to the control system, in order to determine the second auxiliary data item (IC3) upon reception of the said game authorization information item, by the box, at the latest,
in that the system processing means are able to store the said second specific information item and the second auxiliary data item (IC3) in the memory means (M2),
in that the second auxiliary encryption means are able to read the second specific information item and the second auxiliary data item in the memory means of the box, and to compare the value of the second auxiliary data item read with that recalculated by the second auxiliary encryption means from the second specific information item read.

16. Device according to one of the preceding claims, characterized in that the memory means are able to store an item of authentication data of the box (IC2) before reception of the said game authorization information item,
and in that the reception of the said game authorization information item is conditioned by verification of this authentication data item.

17. Device according to Claim 16, characterized in that the authentication data item results from an authentication encryption of a third item of information specific to the box (NS),
in that the system processing means include authentication encryption means (21) able to recalculate the authentication data item (IC2) from the third specific information item in order to verify the value of this third specific information item read in the memory means (M2).

18. Device according to one of Claims 9 to 17, characterized in that the first and second auxiliary encryption as well as the authentication encryption include key encryption algorithms, and in that the second auxiliary data item and the authentication data item are encrypted certificates of the second and third specific information items.

19. Device according to one of Claims 9 to 18, characterized in that the first and third specific information items include an authenticator specific to the box such as the serial number of the box, and in that the system processing means include means for reading the serial number.

20. Device according to one of the preceding claims, characterized in that the memory means include two memories (M1, M2), one of them containing the first auxiliary data item the other first of all containing the authentication data item (IC2) then, after verification of the latter, the second auxiliary data item (IC3).

21. Device according to one of the preceding claims, characterized in that the memory means include a state counter (48) able to contain an item of state information representative of the result of the game, as well as a payment counter (49) able to contain an item of payment information representing a payment already made or not yet made to the player,
in that, in the presence of the payment request originating from the player, the system processing means are able furthermore to read the contents of the state and payment counters before delivering the said payment request information item to the box.

22. Device according to one of the preceding claims, characterized in that it includes power supply means (35, 36) allowing the operation of at least some of these means of the box before reception of the game authorization information item.

23. Device according to one of the preceding claims, characterized in that the box is unable to be played following a comparison between an item of reference data and an item of game data representing a losing game and/or after actual payment to the player.

24. Device according to one of the preceding claims, characterized in that the communication interface includes means (28) for displaying to the player an item of result information representative of the result of the comparison between the game and reference data items, indicating to him whether he has won or lost.

25. Device according to one of the preceding claim [sic], characterized in that the memory means are able to store a plurality of reference data items, and
in that a plurality of game data items are able to be input by the player.

26. Device according to Claim 25, characterized in that the game data items are input successively, each game data item input being compared with a predetermined item of reference data,
and in that an item of game data can be input via the communication interface only in the event of agreement between the previously input game data item and the corresponding reference data item,
and in that a different item of win information (NG1, ... NG10) corresponds to each agreement.

27. Device according to Claims 24 and 26, charac-terized in that the result information item includes the display of an item of win level information corresponding to the win information item contained in the memory means.

28. Device according to one of Claims 25 to 27, characterized in that the memory means include a win counter (50) able successively to contain predetermined binary win words representing successive win information items, each binary word differing from the following word and from the preceding word by at least two bits.

29. Device according to one of Claims 25 to 28, taken in combination with Claim 21, characterized in that the state counter (48) is able successively to contain predetermined binary state words representing successive state information items, each binary state word differing from the following word and from the preceding word by at least two bits.

30. Device according to one of the preceding claims taken in combination with Claims 5 and 25, charac-terized in that the first random generation means include a plurality of game counters (53-1, ... 53-10), each counter being capable of containing an item of reference data and is associated with an item game data input by the player.

31. Device according to Claim 30, characterized in that reception of the said game authorization information item (DV) stops the operation of the counters, the plurality of reference data items then being the plurality of values which the counters had upon reception of the said game authorization information item.

32. Device according to one of Claims 1 to 29 taken in combination with Claims 5 and 26, characterized in that the counter is associated with all the successive inputs of game data items by the player, and in that the inputting of a game data item by the player fixes the corresponding counter at a value defining the reference value associated with this game data item.

33. Device according to one of the preceding claims, characterized in that the control system includes a dialogue interface (14, 15) able to receive the said payment request originating from the player.

34. Device according to Claim 33, characterized in that, in the presence of a win information item verification request originating from the player, the system processing means are able to read the contents of the win, state and payment counters and to communicate the results of this reading on the dialogue interface.

35. Device according to one of the preceding claims, characterized in that, in the presence of a payment request originating from the player, the system processing means are able to transmit a status request (ST1) to the system input/output interface, in response to which the box processing means deliver the said win information item to the box input/output interface.

36. Device according to one of the preceding claims, characterized in that the control system includes at least one station, such as a terminal.

37. Device according to Claims 15 and 36, charac-terized in that the second specific information item includes the serial number of the station, the date of sale of the box to the player and the order number of this sale on this date.

38. Device according to Claim 36 or 37, charac-terized in that the control system includes a plurality of stations of similar structure, the game authorization and payment request information items being able to be delivered by the same station or by two different stations.

39. Device according to one of Claims 36 to 38, characterized in that each box possesses a unique authenticator, in that the control system includes storage means (23) for a list of authenticators of the winning and paid boxes, in that, in the presence of a payment request originating from the player and corresponding to a win higher than a predetermined win value, the system processing means are able to verify whether the authenticator of the box concerned is already contained in the said list.

40. Device according to one of the preceding claims, characterized in that the box includes a hard-wired integrated circuit (37) incorporating the box processing means and the memory means of the box.
